(19) Europäisches Patentamt
European Patent Office
Office européen des brevets

(11) EP 2 081 740 B1

(12) FASCICULE DE BREVET EUROPEEN

(45) Date de publication et mention
de la délivrance du brevet:
**01.11.2017 Bulletin 2017/44**

(51) Int Cl.:
***B25J 9/16*** *(2006.01)*

(21) Numéro de dépôt: **07823847.4**

(22) Date de dépôt: **25.09.2007**

(86) Numéro de dépôt international:
**PCT/FR2007/052002**

(87) Numéro de publication internationale:
**WO 2008/037920 (03.04.2008 Gazette 2008/14)**

(54) **PROCEDE ET DISPOSITIF DE DETECTION DE COLLISION ENTRE DEUX OBJETS SIMULES NUMERIQUEMENT**

VERFAHREN UND VORRICHTUNG ZUR ERFASSUNG EINER KOLLISION ZWISCHEN ZWEI NUMERISCH SIMULIERTEN OBJEKTEN

METHOD AND DEVICE FOR DETECTING COLLISION BETWEEN TWO NUMERICALLY SIMULATED OBJECTS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.09.2006 FR 0608433**

(43) Date de publication de la demande:
**29.07.2009 Bulletin 2009/31**

(73) Titulaire: **Commissariat à l'Énergie Atomique et aux Énergies Alternatives**
**75015 Paris (FR)**

(72) Inventeur: **MERLHIOT, Xavier**
**92320 Châtillon (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**FR-A- 2 837 307**

- **GUIBAS L J ET AL: "Kinetic collision detection: algorithms and experiments" PROCEEDINGS OF THE 2001 IEEE INTERNATIONAL CONFERENCE ON ROBOTICS AND AUTOMATION. ICRA 2001. SEOUL, KOREA, MAY 21 - 26, 2001, PROCEEDINGS OF THE IEEE INTERNATIONAL CONFERENCE ON ROBOTICS AND AUTOMATION, NEW YORK, NY : IEEE, US, vol. VOL. 1 OF 4, 21 mai 2001 (2001-05-21), pages 2903-2910, XP010550583 ISBN: 0-7803-6576-3**
- **TERAN J ET AL: "Adaptive physics based tetrahedral mesh generation using level sets" ENGINEERING WITH COMPUTERS ; AN INTERNATIONAL JOURNAL FOR SIMULATION-BASED ENGINEERING, SPRINGER-VERLAG, LO, vol. 21, no. 1, 1 novembre 2005 (2005-11-01), pages 2-18, XP019381196 ISSN: 1435-5663**
- **LACHAUD J ET AL: "Deformable model with adaptive mesh and automated topology changes" 3-D DIGITAL IMAGING AND MODELING, 2003. 3DIM 2003. PROCEEDINGS. FOURTH INTERNATIONAL CONFERENCE ON 6-10 OCT. 2003, PISCATAWAY, NJ, USA,IEEE, 6 octobre 2003 (2003-10-06), pages 12-19, XP010662672 ISBN: 0-7695-1991-1**

EP 2 081 740 B1

**Description**

La présente invention a pour objet un procédé et un dispositif de détection de collision et de construction et de visualisation d'informations géométriques de contact, et plus généralement de proximité entre un nombre fini d'objets simulés numériquement, c'est-à-dire d'objets virtuels.

On a déjà proposé dans le brevet US 6 862 026 (document [9]) un procédé de détection de collision entre objets virtuels basé sur la construction de boîtes comprenant les objets à considérer, en fonction du déplacement souhaité. Ce procédé de l'art antérieur consiste à vérifier la superposition des boîtes contenant les deux objets, et le cas échéant à subdiviser chaque boîte en deux boîtes plus petites. Une optimisation est effectuée en utilisant des boîtes dont les axes sont alignés sur les axes de l'un des objets. Ce procédé n'utilise pas de distance entre objets.

On connaît par ailleurs par le document de référence [1] un procédé de détermination de distances minimales locales entre des objets polyédriques volumiques représentés par une triangulation de leur frontière en dimension 3, mais ce procédé est explicité en relation avec certaines applications particulières et implique des calculs relativement longs qui ne sont pas adaptés au cas de la simulation en temps réel.

Enfin, le document GUIBAS L J et AL : « Kinetic collision detection : algorithms and experiments », ISBN : 0-7803-6576-3 décrit des algorithmes de détection de collision, présente leur implémentation et les compare à des algorithmes préexistants.

La présente invention vise à remédier aux inconvénients précités et à permettre de réaliser plus facilement la détection des collisions ou la construction des informations géométriques de contact ou de proximité entre un nombre fini d'objets simulés numériquement, en optimisant la vitesse de traitement et en fournissant des solutions très robustes vis-à-vis des déplacements et des rotations des objets virtuels, afin notamment de ne pas déstabiliser le rendu graphique ou haptique par suite d'une interaction avec l'utilisateur qui est par nature peu prévisible.

Ces buts sont atteints grâce à un procédé de détection de collision et de construction d'informations géométriques de contact et de proximité entre au moins un premier objet polyédrique simulé numériquement et au moins un deuxième objet polyédrique simulé numériquement,
caractérisé en ce que l'on représente les premier et deuxième objets polyédriques simulés numériquement sous la forme de complexes simpliciaux dans $R^n$, où $R^n$ désigne le produit cartésien du corps des réels n fois par lui-même, avec n égal à 2 ou à 3,
en ce que l'on effectue une étape de prétraitement pour chaque complexe simplicial dont les coordonnées des sommets sont données dans un système de coordonnées fixé,
en ce que ce prétraitement consiste au moins à calculer pour chaque face de chaque complexe simplicial une description géométrique du cône polyédrique correspondant aux normales au sens fort associées à cette face, à déterminer le label de la classe de contact à laquelle appartient cette face et à déterminer pour chaque complexe simplicial un arbre de volumes englobants de l'objet du complexe simplicial à partir à la fois de la position des faces du complexe simplicial et des ensembles de normales au sens fort associées,
et en ce que, à partir des informations obtenues à l'issue de l'étape de prétraitement, on procède à un calcul de distances minimales locales et de quasi-distances minimales locales, ces dernières correspondant chacune à un couple de points appartenant respectivement à des objets distincts et qui définiraient une distance minimale locale si la position d'un objet par rapport à l'autre subissait une rotation d'un angle faible inférieur à un seuil donné.

Ce procédé est applicable au cas d'objets polyédriques simulés numériquement qui peuvent être aussi bien rigides que déformables.

Les étapes de prétraitement et de calcul des distances minimales locales (LMD) et des quasi-distances minimales locales (quasi LMD) peuvent être effectuées en temps réel.

L'invention concerne également un dispositif de détection de collision et de construction d'informations géométriques de contact et de proximité entre au moins un premier objet polyédrique simulé numériquement et au moins un deuxième objet polyédrique simulé numériquement,
caractérisé en ce qu'il comprend des moyens pour représenter les premier et deuxième objets polyédriques simulés numériquement (10, 20) sous la forme de complexes simpliciaux dans $R^n$, où $R^n$ désigne le produit cartésien du corps des réels n fois par lui-même, avec n égal à 2 ou à 3,
en ce qu'il comprend des moyens de prétraitement pour chaque complexe simplicial dont les coordonnées des sommets sont données dans un système de coordonnées fixé,
en ce que ces moyens de prétraitement comprennent au moins des moyens de calcul pour chaque face de chaque complexe simplicial d'une description géométrique du cône polyédrique correspondant aux normales au sens fort associées à cette face, des moyens de détermination du label de la classe de contact à laquelle appartient cette face et des moyens de détermination pour chaque complexe simplicial d'un arbre de volumes englobants de l'objet du complexe simplicial à partir à la fois de la position des faces du complexe simplicial et des ensembles de normales au sens fort associées,
et en ce qu'il comprend des moyens de calcul associés aux moyens de prétraitement, pour procéder à un calcul de distances minimales locales et de quasi-distances minimales locales, ces dernières correspondant chacune à un couple de points appartenant respectivement à des objets distincts et qui définiraient une distance minimale locale si la position d'un objet par rapport à l'autre subissait une rotation d'un angle faible inférieur à un seuil donné.

Le dispositif peut être couplé à un solveur mécanique.

L'ensemble du dispositif et du solveur mécanique peut être couplé à au moins un périphérique parmi les périphériques comprenant notamment une interface graphique utilisateur, une souris, un périphérique de capture de mouvement, une interface à retour d'effort, une interface tactile, une interface sonore.

L'invention permet en particulier une simulation stable de comportement mécanique (sans oscillations parasites), et le choix d'une grande raideur du rendu haptique qui procure un ressenti fidèle à la situation représentée.

Cette solution permet d'identifier les zones de contact, avec une solution régularisée vis-à-vis des translations et des rotations de l'objet. C'est-à-dire que l'on peut anticiper ce qui va se passer. Le traitement du problème des contacts peut ainsi obtenir une solution stable sans avoir recours à une approche événementielle qui nécessiterait le calcul des instants de contact et l'adaptation des pas de temps de l'intégrateur numérique en fonction des dates de ces instants.

L'avantage de la solution proposée est non seulement de fournir une solution très stable au cours des déplacements en temps réel d'objets virtuels, mais aussi de résoudre les situations difficiles à simuler telles que :

- recherche de contacts conformants entre objets sans collision ni traversée des objets (par exemple positionnement d'un objet plan sur un autre objet plan, détection de contacts plans entre deux objets) ;
- recherche d'une trajectoire de montage/démontage d'une pièce en évitant les zones de contact et/ou de blocage ;
- mise en évidence des zones de contact pour des objets notamment concaves, avec solution stable lors de mouvements de faible amplitude angulaire ou de déplacement au voisinage d'une position.

L'invention ne se limite pas à la détection de contacts ponctuels, mais elle permet aussi la détection de contacts conformants pour différentes topologies : contacts linéiques ou contacts surfaciques entre deux objets. Elle permet également de détecter des intersections et, dans certaines conditions, des profondeurs d'interpénétration.

D'autres caractéristiques et avantages de l'invention ressortiront de la description suivante de modes particuliers de réalisation, donnés à titre d'exemples, en référence aux dessins annexés, sur lesquels :

- la Figure 1 est un diagramme explicatif d'un aspect du procédé selon l'invention montrant un exemple en dimension 2 du choix ou du rejet sélectif de différentes distances minimales locales (LMD) entre deux objets virtuels,
- la Figure 2 montre un exemple d'arbre orienté pouvant être utilisé dans une étape du procédé selon l'invention,
- les Figures 3 à 7 montrent diverses positions relatives entre un premier objet cubique et un deuxième objet plan simulés numériquement, qui peuvent être visualisés selon l'invention, et
- la Figure 8 est un schéma bloc d'un exemple de dispositif selon l'invention.

Avant de décrire en détail le procédé et le dispositif selon l'invention, on donnera ci-dessous un certain nombre de définitions utiles, soit classiques, c'est-à-dire recouvrant des concepts généraux largement acceptés par la communauté scientifique et technique, et pour lesquels une terminologie suffisamment unifiée existe dans la littérature scientifique et technique, soit plus spécifiques, dans la mesure où bien qu'il s'agisse de définitions de concepts relativement généraux, la terminologie peut varier selon les auteurs. On donnera également quelques définitions propres à l'invention et au domaine d'application du procédé.

I - Définitions classiques

Dans la suite, $R^n$ désigne le produit cartésien du corps des réels $n$ fois par lui-même, où $n$ est un entier strictement positif. Cet espace est considéré muni de sa structure euclidienne naturelle. La sphère unité de $R^n$ est notée $S^{n-1}$.

Intérieur et bord relatifs

Notion topologique. Soit A une partie de $R^n$. L'intérieur relatif de A est l'intérieur de A dans la topologie naturelle (i.e. celle qui découle de la structure euclidienne) du sous-espace affine de $R^n$ engendré par A. L'intérieur relatif de A est noté Ri($A$).

De même, le bord relatif (ou frontière relative) de A est le bord de A dans la topologie naturelle du sous-espace affine de $R^n$ engendré par A.

#### Simplexe

Notion géométrique. Soit *d* un entier positif ou nul. Un simplexe (ou *d*-simplexe, ou encore simplexe de dimension *d*) de $R^n$ est défini comme l'enveloppe convexe de *d+1* points de $R^n$ affinement indépendants.

On remarque que la dimension topologique d'un *d*-simplexe est égale à *d*.

#### Face d'un simplexe

Soit *S* un *d*-simplexe défini comme l'enveloppe convexe de l'ensemble de points de $R^n$ affinement indépendants $\{p_0, ..., p_d\}$. Les simplexes définis comme les enveloppes convexes de sous-ensembles de $\{p_0, ..., p_d\}$ sont appelés les faces du simplexe *S*.

Le simplexe *S* est une face particulière de *S*. Les faces d'un simplexe *S* différentes de lui-même sont appelées les faces propres de *S*. Leur union est appelée le bord simplicial (ou frontière simpliciale) de *S*, noté Bd *S*. L'intérieur simplicial de *S* est défini comme le complémentaire de Bd *S* dans *S:*

$$\text{Int}\, S = S - \text{Bd}\, S \, .$$

L'intérieur simplicial et le bord simplicial d'un simplexe coïncident avec respectivement l'intérieur relatif et le bord relatif de ce simplexe.

#### Complexe simplicial

Un complexe simplicial *K* dans $R^n$ est un ensemble de simplexes de $R^n$ tel que les deux conditions suivantes soient vérifiées :

- toute face d'un élément de *K* est aussi dans *K* ;
- l'intersection de deux simplexes quelconques de *K* est une face de chacun d'eux.

Les éléments d'un complexe simplicial sont appelés les faces de ce complexe. La dimension d'un complexe simplicial est définie comme la dimension maximale de ses faces.

L'union des faces d'un complexe simplicial *K* s'appelle le corps du complexe *K*, noté |*K*|.

Il est facile de montrer que les intérieurs relatifs des faces d'un complexe simplicial forment une partition du corps de ce complexe.

On peut se référer également à cet égard à la page 7 du document [2].

#### Polytope

Définition issue de la topologie algébrique. Soit *K* un complexe simplicial dans $R^n$. En supposant que chaque face $\sigma$ de K est munie de sa topologie naturelle (i.e. de la topologie induite sur $\sigma$ par la topologie naturelle de $R^n$), on peut munir le corps de *K* d'une topologie définie de la manière suivante : un sous-ensemble *A* de |*K*| sera considéré comme fermé dans |*K*| si et seulement si $A \cap \sigma$ est fermé dans $\sigma$, pour toute face $\sigma$ de *K*. L'espace topologique ainsi défini sera toujours noté |*K*| et est appelé l'espace topologique sous-jacent à *K*, ou encore le polytope de *K*.

#### Polyèdre

Définition issue de la topologie algébrique. Un espace topologique qui est le polytope d'un complexe simplicial fini sera appelé un polyèdre.

#### Cône

Définition issue de l'analyse convexe. Toute partie C d'un espace vectoriel sur le corps des réels stable par multiplication par les réels strictement positifs est appelée cône. On dit qu'un cône est pointé lorsqu'il contient l'origine.

*Remarque* : Un cône de $R^n$ n'est pas nécessairement de révolution, ni convexe, ni fermé.

Cône polaire

Définition issue de l'analyse convexe. Soit A une partie de R$^n$. L'ensemble noté *A\** et défini de la manière suivante :

$$A^* = \left\{ y \in \mathrm{R}^n \,/\; \forall x \in A, \langle y, x \rangle \leq 0 \right\}$$

est appelé le cône polaire de A, ou encore simplement le polaire de A.

C'est un cône convexe, car c'est l'intersection de demi-espaces fermés. On note également que le polaire de A, le polaire de l'enveloppe convexe de A, ainsi que le polaire du cône convexe engendré par A, coïncident.

Cône tangent

Définition issue de l'analyse convexe. Soit A une partie de R$^n$ et x un élément de A. Un vecteur y de R$^n$ est dit tangent à A au point x si l'une des deux conditions suivante est remplie :

- y est le vecteur nul ;
- y est non nul et il existe une suite de R$^n$ $(x_k)_{k \in \mathrm{N}}$, à valeurs dans $A \backslash \{x\}$, telle que :

  ○ $\lim_{k \to \infty} x_k = x$ ;

  ○ $\lim_{k \to \infty} \dfrac{x_k - x}{\|x_k - x\|} = \dfrac{y}{\|y\|}$ .

L'ensemble des vecteurs tangents à A en x est appelé le cône tangent à A en x et noté $T_A(x)$.

C'est un cône fermé, non nécessairement convexe.

Pour plus de détails sur les cônes tangents et une définition rigoureuse des cônes normaux, on peut se référer par exemple au document [3].

Dilatation

Notion issue du domaine de la morphologie mathématique. Soit *E* un espace métrique muni d'une distance *d*. L'opération de dilatation de rayon $\varepsilon$, aussi appelée $\varepsilon$-dilatation, associe à toute partie *A* de *E*, la partie de *E*, appelée $\varepsilon$-dilaté de A, constituée de l'union des boules de rayon $\varepsilon$ ayant pour centre un élément de *A.*

Partition

Terme ensembliste. Soit *E* un ensemble. Un ensemble *P* de parties de *E* est une partition de *E* s'il vérifie les trois conditions suivantes :

- les éléments de *P* sont des parties non-vides de *E*;
- les éléments de *P* sont deux à deux disjoints ;
- l'union des éléments de *P* est égale à *E*.

Recouvrement

Terme ensembliste. Soit Eun ensemble. Un recouvrement d'une partie *A* de *E* est une collection de partie de *E* telle que l'union de ces parties contienne *A.*

Toute partition d'un ensemble *E* est aussi un recouvrement de *E.*

Hiérarchie

Terme ensembliste. Soit *E* un ensemble fini. Une hiérarchie sur *E* est un ensemble *H* de parties de *E* qui vérifie les trois conditions suivantes :

- H contient les singletons de *E* ;

- H contient $E$ ;
- Si $A$ et $B$ sont deux éléments de $H$ et que ce sont des parties non-disjointes de $E$, alors $A$ contient $B$ ou $B$ contient $A$.

Arbre orienté

Notion issue de la théorie des graphes. Un arbre orienté est un graphe orienté connexe sans circuit dans lequel tout sommet a un degré entrant (nombre d'arêtes ayant ce sommet comme extrémité) inférieur ou égal à 1.

Un arbre orienté possède un et un seul sommet dont le degré entrant est 0, alors que tous les autres sommets sont de degré entrant 1. Ce sommet est appelé la racine de l'arbre.

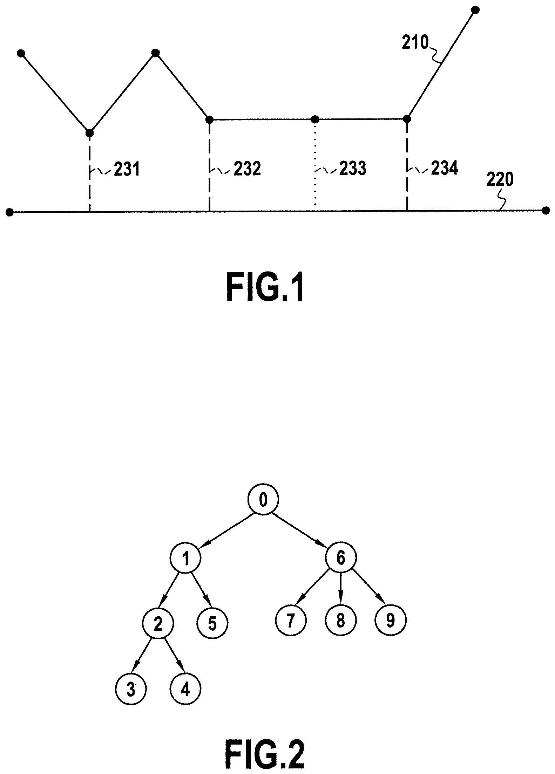

Un exemple d'arbre orienté (dont les noeuds sont munis de labels) est donné sur la Figure 2.

La longueur maximale d'un chemin dans un arbre orienté est appelée la profondeur de l'arbre.

Pour chaque noeud, il existe un unique chemin partant de la racine et arrivant en ce noeud. La longueur de ce chemin est appelée la profondeur du noeud dans l'arbre. La profondeur de la racine est donc 0. Dans l'exemple de la Figure 2, le noeud 8 est de profondeur 2, tandis que le noeud 4 est de profondeur 3.

Les noeud dont le degré partant est nul sont appelés les feuilles de l'arbre. Dans l'exemple de la Figure 2, les feuilles de l'arbre sont les noeuds 3, 4, 5, 7, 8 et 9.

Soit $a$ un noeud d'un arbre orienté. Les noeuds auxquels arrivent les arêtes partantes de $a$ sont appelés les enfants du noeud $a$. Une feuille est donc un noeud qui n'a pas d'enfants.

Le nombre maximal d'enfants d'un noeud dans un arbre orienté est appelé l'arité de l'arbre.

Remarque : les arbres les plus utilisés dans le domaine de la détection de collision sont des arbres de faible arité, par exemple des arbres binaires (d'arité 2), ternaires (d'arité 3) ou quaternaires (d'arité 4).

2 - Définitions spécifiques

Objet polyédrique

Un objet polyédrique est un corps physique pour lequel une représentation géométrique possible est un polyèdre, au sens défini plus haut. Ceci est valable aussi bien dans un espace physique de référence de dimension 2 que dans un espace de dimension 3, le polyèdre associé étant respectivement un polyèdre de $R^2$ ou de $R^3$.

Vecteur unitaire orthogonal à une face d'un simplexe

Soient $S$ un $d$-simplexe de $R^n$ avec $d > 0$, $\sigma$ une face de $S$ de dimension $d$-1 et $v$ le sommet de $S$ opposé à $\sigma$. Soit $a$ le projeté orthogonal de $v$ sur le sous-espace affine de $R^n$ engendré par $\sigma$. Les points $a$ et $v$ sont distincts. Le vecteur unitaire $\dfrac{a-v}{\|a-v\|}$ est appelé le vecteur unitaire orthogonal à la face $\sigma$ du simplexe $S$ et noté $u_S(\sigma)$.

Trace d'un cône sur la sphère unité

Soit C un cône de $R^n$. La trace de C sur la sphère unité est l'intersection de C avec $S^{n-1}$. Si C contient l'origine, alors le cône pointé engendré par la trace de C sur la sphère unité est égal à C.

Vecteurs normaux au sens fort

Soit A une partie de $R^n$. Un vecteur $R^n$ est dit normal au sens fort à A au point x s'il appartient au polaire de $T_A(x)$. L'ensemble des vecteurs normaux au sens fort à A au point x est donc le cône convexe $T_A(x)^*$, qui sera appelé le cône normal au sens fort à A au point x et noté $n_A(x)$.

Soit B une sous-partie de A. Un vecteur y de $R^n$ est dit normal au sens fort à A associé à B s'il existe un point x de B tel que y appartienne à $T_A(x)^*$. L'ensemble des vecteurs normaux au sens fort à A associés à B sera noté $n_A(B)$.

On a donc:

$$n_A(B) = \bigcup_{x \in B} n_A(x).$$

### Interpénétration (ou interférence)

Notion géométrique. Soit $A$ et $B$ deux compacts de $R^n$. On dira que $A$ et $B$ sont en interpénétration (ou encore en interférence) si leurs intérieurs ne sont pas disjoints.

### Contact ponctuel

Domaine de la modélisation des phénomènes mécaniques de contact. La définition proposée ici est une formalisation mathématique de la notion géométrique de contact ponctuel.

Soit $A$ et $B$ deux compacts de $R^n$. Un contact ponctuel entre $A$ et $B$ est défini comme un point isolé de l'intersection de $A$ et $B$.

### Contact conformant

Domaine de la modélisation des phénomènes mécaniques de contact. La définition proposée ici est une formalisation mathématique de la notion géométrique de contact conformant.

Soit $A$ et $B$ deux compacts de $R^n$. Un contact conformant entre $A$ et $B$ est défini comme une composante connexe par arcs, d'intérieur vide et non réduite à un point, de l'intersection de A et B.

### Distance minimale locale

Soit $E$ un espace métrique muni d'une distance $d$. Soit $A$ et $B$ deux parties de $E$. Une distance minimale locale entre $A$ et $B$, notée en abrégé LMD dans la suite, est définie comme un minimum local de la restriction de la fonction $d$, définie sur le produit cartésien de $E$ par lui-même, au produit cartésien de $A$ et $B$. Un couple de points $(a,b) \in A \times B$ réalisant un tel minimum local est appelé le support de la distance minimale locale considérée, tandis que le réel positif $d(a,b)$ est appelé la valeur de la LMD.

### Interstice

Domaine de la modélisation des phénomènes mécaniques de contact. La définition proposée ici est une formalisation mathématique de la notion géométrique d'interstice, généralisée au cas des corps non nécessairement convexes.

Soit $A$ et $B$ deux compacts de $R^n$. Les interstices entre $A$ et $B$ sont par définition les valeurs des LMD entre $A$ et $B$.

### Sous-arbre orienté ou branche

Théorie des graphes. Un sous-graphe d'un arbre orienté $T$ qui est encore un arbre orienté est appelé un sous-arbre orienté de $T$ ou encore une branche de $T$.

### Volume englobant

Notion issue du domaine de la détection de collisions. Il est donné ici une formalisation mathématique.

Un volume englobant est un élément d'un recouvrement d'une partie de $R^n$. Il sera également employé, bien que ce ne soit pas habituel dans le domaine de la détection de collisions, pour désigner un élément d'un recouvrement d'une partie de $S^{n-1}$ ou de $R^n \times S^{n-1}$.

### Hiérarchie de volumes englobants

Notion issue du domaine de la détection de collisions. Soit $A$ une partie de $E$, où $E$ désigne $R^n$, $S^{n-1}$, ou $R^n \times S^{n-1}$. On appellera hiérarchie de volumes englobants de $A$ toute famille finie $H = (V_1, ..., V_N)$ de parties de $E$, dits volumes englobants, associée à un arbre orienté $T$, dit arbre de volumes englobants, dont les noeuds sont en bijection avec les éléments de $H$ et qui vérifie la propriété suivante : pour tout sous-arbre orienté $T'$ de $T$ ayant même racine que $T$, les éléments de $H$ associés aux feuilles de $T'$ forment un recouvrement de $A$.

Cette définition a pour conséquence que les volumes englobants associés aux feuilles de l'arbre $T$ forment un recouvrement de $A$. De même, le volume englobant associé à la racine de $T$ recouvre $A$ à lui seul.

Un moyen simple de construire une hiérarchie de volumes englobants d'une partie $A$ de $E$ est de commencer par construire une hiérarchie $H'$ sur une partition de $A$ au sens ensembliste. Les méthodes usuelles pour cela sont la subdivision successive à partir de $A$ tout entier et l'agrégation successive à partir d'une partition de $A$. On peut ensuite construire une hiérarchie de volumes englobants de *A* à partir de *H'* en recouvrant la réunion des éléments de chaque élément de *H'* par un élément de *H*, la structure d'arbre orienté associée à *H* découlant directement de la structure hiérarchique de *H'*.

On introduira maintenant trois notions qui sont propres à l'invention.

Sous-partie d'une partie de R" munie des vecteurs normaux au sens fort associés

Etant donnée une partie *A* de R$^n$ et *B* une sous-partie de *A,* on dira que l'on munit *B* des normales au sens fort à A associées (sous-entendu à *B*) lorsque l'on désignera la partie de R$^n$×R$^n$ formée par le produit cartésien de *B* et de $n_A(B)$. On peut remarquer que cet ensemble est vide dès que $n_A(B)$ l'est.

Classe de contact

Soit *K* un complexe simplicial. On classifie, en classes dites *classes de contact* et labellisées de 0 à 7, les faces de *K*, en fonction de leur dimension topologique, de la dimension topologique de l'intersection avec la sphère unité des ensembles de vecteurs normaux au sens fort au corps de *K* associés à leur intérieur relatif, et éventuellement la géométrie de l'intersection de leur étoile dans *K* et de la frontière (dans R$^n$) du corps de *K*, selon le tableau 1 ci-dessous pour *n* = 3.

Tableau 1

| Dimension topologique de la face $\sigma$ | Dimension topologique de $n_{|K|}(\text{Int } \sigma) \cap S^{n-1}$ | Géométrie de l'intersection de l'étoile de $\sigma$ dans K et de la frontière du corps de K | Label de la classe de contact de $\sigma$ |
|---|---|---|---|
| 0 | 2 | quelconque | 0 |
| 0 | 1 | quelconque | 1 |
| 1 | 1 | quelconque | 2 |
| 0 | 0 | non plane | 3 |
| 0 | 0 | plane | 4 |
| 1 | 0 | quelconque | 5 |
| 2 | 0 | quelconque | 6 |
| quelconque (0, 1, 2 ou 3) | -1 | quelconque | 7 |

Pour *n* = 2, on utilise le tableau 2 ci-dessous :

Tableau 2

| Dimension topologique de la face $\sigma$ | Dimension topologique de $n_{|K|}(\text{Int } \sigma) \cap S^{n-1}$ | Géométrie de l'intersection de l'étoile de $\sigma$ dans K et de la frontière du corps de K | Label de la classe de contact de $\sigma$ |
|---|---|---|---|
| 0 | 1 | quelconque | 0 |
| 0 | 0 | quelconque | 1 |
| 1 | 0 | quelconque | 2 |
| quelconque (0, 1, ou 2) | -1 | quelconque | 7 |

On rappelle que la dimension topologique de l'ensemble vide est -1 par convention.

Quasi-distance minimale locale (régularisée vis-à-vis des rotations)

Extension de la notion de distance minimale locale entre les dilatés de deux complexes simpliciaux non interférents Cette définition sera précisée plus loin, lorsque les éléments nécessaires à sa formulation auront été mis en place.

On explicitera maintenant de façon détaillée le procédé selon l'invention.

De manière hiérarchique, on peut distinguer deux étapes, temporellement disjointes, du procédé de l'invention, ces deux étapes pouvant à leur tour être décomposées en sous-étapes. Ces deux étapes sont :

    1. Etape de pré-calcul : cette étape est réalisée lors de la préparation de la simulation proprement dite. Elle consiste à calculer des données nécessaires à l'efficacité (i.e. la rapidité) des traitements effectués dans la deuxième étape.
    2. Etape de calcul de distances minimales locales : cette étape tire parti des informations pré-calculées pour accélérer les calculs nécessaires au procédé et atteindre un niveau de performance compatible avec une simulation en temps réel.

Afin de faciliter la compréhension du fonctionnement du procédé, on commencera par présenter ci-dessous des résultats qui établissent un lien entre la notion de distance minimale locale entre deux complexe simpliciaux et la notion d'ensemble de vecteurs normaux (au sens fort) associés à un point ou une partie d'un complexe simplicial. On poursuivra ensuite la description du procédé proprement dit.

L'invention prend en compte les résultats importants suivants.

Soient $K_1$ et $K_2$ deux complexes simpliciaux dans R$^n$. Soient $x_1$ et $x_2$ deux points des corps de $K_1$ et $K_2$ respectivement. Le couple $(x_1,x_2)$ est le support d'une LMD entre les corps de $K_1$ et $K_2$ si et seulement si les deux conditions suivantes sont vérifiées :

-   $x_2 - x_1 \in n_{|K_1|}(x_1)$;
-   $x_1 - x_2 \in n_{|K_2|}(x_2)$.

Soit $K$ un complexe simplicial dans R$^n$. Soit $x$ un point du corps de $K$. Soit $\sigma_x$ l'unique face de $K$ dont l'intérieur relatif contient $x$.

- Le cône tangent au corps de $K$ au point $x$ est égal au cône engendré par $\overline{St}\sigma_x\text{-}x$.
- Le cône tangent au corps de $K$ au point $x$ est égal à R$^n$ dès que $x$ appartient à l'intérieur de $|K|$ dans R$^n$.
- $n_{|K|}(x)=(\text{DirAff}\sigma_x)^{\perp}\cap\{u_\sigma(\sigma_x), \sigma\in\overline{St}_K\sigma_x, \dim\sigma=\dim\sigma_x+1\}^*$.

Par conséquent :

- Si $x$ et $y$ sont deux points du corps de $K$ contenus dans l'intérieur relatif de la même face $\sigma$ de $K$, alors les cônes tangents au corps de $K$ en $x$ et $y$ sont égaux ;
- $n_{|K|}(x)=n_{|K|}(\text{Int}\sigma_x)$.
- $n_{|K|}(\text{Int}\sigma_x)$ est un cône polyédrique.

On peut énoncer un corollaire de ce résultat.

Supposons de plus que les corps de $K_1$ et $K_2$ sont disjoints. Le couple $(x_1,x_2)$ est le support d'une LMD entre les corps de $K_1$ et $K_2$ si et seulement si les deux conditions suivantes sont vérifiées :

-   $\dfrac{x_2 - x_1}{\|x_2 - x_1\|}$ appartient à $n_{|K_1|}(x_1)$;

-   $\dfrac{x_1 - x_2}{\|x_1 - x_2\|}$ appartient à $n_{|K_2|}(x_2)$.

On en déduit en particulier que les couples de points $(x_1,x_2)$ supports de distances minimales locales entre les corps de $K_1$ et $K_2$ sont tels que $\underline{n}_{|K_1|}(x_1)$ et $n_{|K_2|}(x_2)$ ne sont pas réduits à {0}.

Soient $K_1$ et $K_2$ deux complexes simpliciaux dans R$^n$, de corps disjoints. Soient $A_1$ et $A_2$ des parties des corps de $K_1$ et $K_2$ respectivement. S'il existe (au moins) un couple de points $(x_1,x_2)$ dans $A_1\times A_2$ support d'une LMD entre les corps de $K_1$ et $K_2$, alors les trois conditions suivantes sont vérifiées :

    1. $P_1(A_1,A_2)$ : l'intersection de $n_{|K_1|}(A_1)$ et $-n_{|K_2|}(A_2)$ n'est pas réduite à {0};
    2. $P_2(A_1,A_2)$ : l'intersection de $n_{|K_1|}(A_1)$ et du cône engendré par $A_2\text{-}A_1$ n'est pas réduite à {0} ;
    3. $P_3(A_1,A_2)$ : l'intersection de $-n_{|K_2|}(A_2)$ et du cône engendré par $A_2 - A_1$ n'est pas réduite à {0}.

On peut ici expliciter les aspects principaux du procédé selon l'invention.

Le procédé de l'invention est applicable aux objets polyédriques rigides et aux objets polyédriques déformables à condition que les déformations correspondent à des déplacements des sommets des complexes simpliciaux sous-jacents.

L'invention améliore et étend le procédé proposé dans le document [1] qui permet le calcul des distances minimales locales entre des objets polyédriques volumiques représentés par une triangulation de leur frontière en dimension 3.

L'invention corrige et clarifie la définition des normales (au sens fort) associées à un point de la frontière d'un tel polyèdre en s'appuyant sur le cadre théorique bien établi de l'analyse convexe.

L'invention permet d'étendre la méthode proposée par le document [1] au cas général des complexes simpliciaux (éventuellement dilatés) en dimension 2 et 3, ce qui comprend notamment les cas suivants :

objets polyédriques surfaciques (plaques, coques, tôles, etc) ;
objets polyédriques linéiques (câbles, poutres, etc) ;
objets polyédriques à topologie hybrides (squelettes, etc) ;
nuages de points (unions de boules, etc).

L'introduction des dilatations augmente le potentiel de représentation du modèle géométrique que constitue la notion de complexe polyédrique. La dilation d'un complexe polyédrique purement surfacique pourra donc représenter la demi-épaisseur d'une coque, celle d'un complexe purement linéique le rayon moyen d'un câble, etc.

Une généralisation de l'invention aux représentations par axe médian est possible.

Les résultats importants mentionnés plus haut permettent de restreindre la recherche calculatoire de distances minimales locales entre les corps de deux complexes simpliciaux $K_1$ et $K_2$, de corps disjoints, aux seuls couples de points $(x_1,x_2)$ des corps de $K_1$ et $K_2$ tels que $n_{|K_1|}(x_1)$ et $n_{|K_2|}(x_2)$ ne soient pas réduits à $\{0\}$. Néanmoins ceci peut représenter une infinité de couples de points à tester, et il n'est donc pas possible de baser un procédé de calcul des LMD entre deux complexes simpliciaux sur une exploration exhaustive de ces couples candidats.

Le dernier résultat présenté plus haut est un élément supplémentaire important pour le fonctionnement du procédé, car il fournit une condition nécessaire qui va pouvoir être utilisée pour la localisation de distances minimales locales entre les corps de $K_1$ et $K_2$.

Supposons en effet que l'on dispose de partitions finies $P_1$ et $P_2$ des corps de $K_1$ et $K_2$ respectivement. Une méthode permettant par le calcul de restreindre les lieux possibles de couples de points supports de LMD entre les corps de $K_1$ et $K_2$ consiste à évaluer les prédicats $P_1$, $P_2$ et $P_3$ qui correspondent aux conditions 1 à 3 décrite plus haut pour chaque couple $(A_1,A_2) \in P_1 \times P_2$. Le nombre de couples à tester est égal au produit des cardinaux de $P_1$ et $P_2$.

Supposons maintenant que les complexes $K_1$ et $K_2$ sont finis (i.e. possèdent un nombre fini de faces). Alors un choix possible pour la partition $P_1$ (resp. $P_2$) est l'ensemble des intérieurs simpliciaux des faces de $K_1$ (resp. $K_2$). Les couples à tester sont alors les (Int$\sigma_1$,Int$\sigma_2$), $\sigma_1$ appartenant à $K_1$ et $\sigma_2$ à $K_2$. De plus, comme le prédicat $P_1$(Int$\sigma_1$,Int$\sigma_2$) est faux dès que $n_{|K_1|}$(Int$\sigma_1$) ou $n_{|K_1|}$(Int$\sigma_1$) est réduit à $\{0\}$, on peut restreindre les tests à effectuer aux seuls couples (Int$\sigma_1$,Int$\sigma_2$) tels que $n_{|K_1|}$(Int$\sigma_1$) et $n_{|K_1|}$(Int$\sigma_1$) ne sont pas réduits à $\{0\}$. En vue d'accélérer ce parcours de couples de faces, le procédé de l'invention utilise une hiérarchie de volumes englobants qui sera décrite plus loin.

On s'intéressera d'abord au cas d'un couple de faces $(\sigma_1,\sigma_2) \in K_1 \times K_2$. On peut montrer qu'un couple de points $(x_1,x_2) \times$(Int$\sigma_1$,Int$\sigma_2$) est le support d'une LMD entre $|K_1|$ et $|K_2|$ si et seulement si les deux conditions suivantes sont vérifiées : $(x_1,x_2)$ est le support d'une LMD entre Int$\sigma_1$ et Int$\sigma_2$ ;

$$x_2 - x_1 \in n_{|K_1|}(\text{Int } \sigma_1) \, ;$$

$$x_1 - x_2 \in n_{|K_2|}(\text{Int } \sigma_2) \, .$$

D'après les résultats précédents, on peut aussi montrer qu'un couple de points $(x_1,x_2) \in$ Int$\sigma_1 \times$ Int$\sigma_2$ est le support d'une LMD entre Int$\sigma_1$ et Int$\sigma_2$ si et seulement si le vecteur $x_2 - x_1$ appartient à (DirAff$\sigma_1)^\perp \cap$(DirAff$\sigma_2)^\perp$. Par conséquent, un tel couple de points est aussi une LMD entre Aff $\sigma_1$ et Aff $\sigma_2$. Plus précisément, un couple de points $(x_1,x_2) \in$ Aff$\sigma_1 \times$ Aff$\sigma_2$ est une LMD entre Int$\sigma_1$ et Int$\sigma_2$ si et seulement si $(x_1,x_2)$ appartient à Int$\sigma_1 \times$ Int$\sigma_2$ et $x_2$-$x_1$ à (Dir Aff $\sigma_1)^\perp \cap$(DirAff$\sigma_2)^\perp$.

Les résultats énoncés dans les deux paragraphes précédents permettent de construire un procédé pratique de calcul des couples de points $(x_1,x_2) \in$ Int$\sigma_1 \times$ Int$\sigma_2$ qui sont des LMD entre $|K_1|$ et $|K_2|$ : Calculer le lieu des points $(x_1,x_2) \in$ Aff$\sigma_1 \times$ Aff$\sigma_2$ tels que $x_2$-$x_1$ appartient à (DirAff$\sigma_1)^\perp \cap$(DirAff$\sigma_2)^\perp$.
Calculer l'intersection de ce lieu avec Int$\sigma_1 \times$ Int$\sigma_2$.
Parmi les éléments $(x_1,x_2)$ de l'ensemble ainsi obtenu, ne retenir que ceux qui vérifient $x_2 - x_1 \in n_{|K_1|}$(Int$\sigma_1$) et $x_1 - x_2 \in$

$n_{|K_2|}(\text{Int}\sigma_2)$.

On obtient ainsi exactement les couples de points $(x_1,x_2)\in \text{Int}\sigma_1\times\text{Int}\sigma_2$ qui sont des LMD entre $|K_1|$ et $|K_2|$.

On notera que les ensembles de couples de points successivement calculés dans le procédé précédent peuvent être infinis, ce qui correspond au cas de contacts conformants entre des objets polyédriques dilatés. Il est possible de donner une description géométrique simple de ces ensembles de couples de points (ce sont des ensembles polyédriques) dans les cas de $R^3$ et $R^2$, mais le caractère infini du nombre de LMD obtenues finalement rend impossible la prise en compte *explicite* de chacune de ces LMD sous forme d'interstice dans une méthode numérique visant à simuler les phénomènes de contact entre solides polyédriques. Cependant, il est possible de montrer, par des arguments simples d'analyse convexe, que la prise en compte de chacune de ces LMD n'est pas nécessaire pour assurer le respect des contraintes unilatérales de non-interpénétration des objets. C'est pourquoi ces cas, qui ne correspondent géométriquement qu'à des cas de parallélisme entre Aff $\sigma_1$ et Aff $\sigma_2$, sont ignorés dans le procédé lié à l'invention.

Les tableaux 3 et 4 ci-dessous donnent, pour les cas de $R^3$ et $R^2$, les nombres possibles de LMD entre $\text{Int}\sigma_1$, et $\text{Int}\sigma_2$.

| dim $\sigma_1$ \ dim $\sigma_2$ | 0 | 1 | 2 | 3 |
|---|---|---|---|---|
| 0 | 0 ou 1 | 0 ou 1 | 0 ou 1 | 0 |
| 1 | | 0 ou 1 ou une infinité | 0 ou une infinité | 0 |
| 2 | | | 0 ou une infinité | 0 |
| 3 | | | | 0 |

Tableau 3 : Nombre de distances minimales locales entre $\text{Int}\sigma_1$ et $\text{Int}\sigma_2$ lorsque $\sigma_1$ et $\sigma_2$ sont des simplexes disjoints de $R^3$

| dim $\sigma_1$ \ dim $\sigma_2$ | 0 | 1 | 2 |
|---|---|---|---|
| 0 | 0 ou 1 | 0 ou 1 | 0 |
| 1 | | 0 ou une infinité | 0 |
| 2 | | | 0 |

Tableau 4 : Nombre de distances minimales locales entre $\text{Int}\sigma_1$ et $\text{Int}\sigma_2$ lorsque $\sigma_1$ et $\sigma_2$ sont des simplexes disjoints de $R^2$

Le détail des calculs pratiques associés au traitement de chacun des cas soulevés par les tableaux précédents sera exposé plus loin. Il convient toutefois d'abord de faire deux remarques essentielles :

Dans certains cas particuliers où le nombre de LMD entre $|K_1|$ et $|K_2|$ dont le support est sur $\text{Int}\sigma_1\times\text{Int}\sigma_2$ est pourtant

un ensemble fini, ces LMD peuvent en fait être ignorés dans le cadre de la construction d'un ensemble de points de contacts entre solides rigides en l'absence de frottement sec au contact. L'élimination de ces LMD permet de réduire le nombre de points de contact utilisés (et donc le temps de calcul des méthodes numériques utilisées au sein d'un solveur numérique traitant le contact) sans pour autant engendrer des erreurs qui pourraient aboutir à l'interpénétration des solides rigides. Les cas particuliers en question correspondent en fait à des LMD qui passent par l'intérieur relatif de contacts conformants entre les solides polyédriques dilatés. Leur élimination correspond donc à ne conserver que les LMD qui soit sont en intersection avec le bord relatif de l'enveloppe convexe d'un contact conformant entre les solides polyédriques dilatés, soit passent par un contact ponctuel entre ces solides. La figure 1 fournit un exemple typique des cas finalement retenus en dimension 2.

Entre les représentations 210, 220 de deux objets, on a visualisé quatre LMD référencés 231 à 234. Dans l'exemple considéré, on a retenu les LMD 231, 232, 234 (en tirets épais) et on a rejeté la LMD inutile 232 (en pointillés fins).

Les algorithmes de résolution de problème d'évolution impliquant le contact peuvent être classifiés en deux groupes principaux : les algorithmes de type événementiel (qui calculent exactement les instants de transition entre séparation et contact) et les algorithmes de type « time-stepping » (à pas de temps) qui utilisent un pas de temps d'intégration fixé à l'avance. Ces derniers sont les seuls capables d'être exécutés à ce jour en temps réel pour le cas d'un grand nombre de contact ou d'une accumulation infinie (le fameux « effet Zeno », qui correspond à une infinité de transitions au cours d'un intervalle de temps fini, comme dans le cas d'une balle rigide soumise à la gravité qui rebondit sur un plan avec un coefficient de restitution en vitesse compris strictement entre 0 et 1).

Dans le cas d'un algorithme de type « time-stepping », il peut s'avérer difficile de stabiliser un objet polyédrique représenté par un simple cube posé sur plan et soumis à la gravité si les seuls points de contact considérés sont issus de LMD entre le cube et le plan. En effet, le seul cas permettant la stabilisation du cube correspond à l'existence simultanée de strictement plus d'une LMD entre le cube et le plan, ce qui correspond au cas du parallélisme entre une face du cube et le plan. Dans ce cas, il existe une infinité de LMD entre le cube et le plan (leur support sur le cube correspond à toute une face de celui-ci). D'après la remarque précédente, le fait de retenir seulement les quatre LMD qui correspondraient aux quatre coins du cube posés sur le plan pour déterminer un ensemble fini de points de contact serait suffisant. Or, non seulement le cas de parallélisme est difficile à caractériser numériquement car il implique d'évaluer de manière exacte (ou suffisamment bien gérée) des prédicats d'égalité entre des nombres réels représentés en machine, mais encore force est de constater que la stabilisation du cube sur le plan implique de pouvoir passer de façon stable au cours de la simulation par des états où aucune face du cube n'est parallèle au plan, mais où des rotations de faible amplitude entraînent un passage (au cours du pas de temps) par un tel état. Une face du cube est alors « presque parallèle » au plan, et il suffit d'une rotation de faible amplitude pour les quatre LMD recherchées existent (éventuellement de manière complètement isolée dans le temps). C'est pourquoi l'invention introduit la notion de quasi-LMD, qui correspond à un couple de points qui serait le support d'une LMD si la position d'un corps par rapport à l'autre subissait une rotation d'un angle faible, dont la mesure maximum est un paramètre du procédé.

L'élimination d'une LMD inutile pour le problème de contact ou la prise en compte d'une quasi-LMD est systématisable en fonction de simples critères locaux que formalisent les classes de contact accompagnées d'un tableau synthétique de compatibilité et de régularisation angulaire qui sera présenté plus loin (Tableau 5).

On notera que, outre le fait que le procédé selon l'invention est généraliste, il présente des avantages fondamentaux qui découlent de la mise en oeuvre de quasi-LMD et de la possibilité d'éliminer une LMD inutile pour le problème de contact.

D'autre part, les ensembles $n_{|K|}(\mathrm{Int}\,\sigma)$ sont des cônes polyédriques qui peuvent être pré-calculés dans le cas d'un corps rigide.

Enfin, l'invention prend en compte le fait que l'examen de toutes les paires $(\sigma_1, \sigma_2) \in K_1 \times K_2$ est inutile et peut être accéléré grâce à l'utilisation de hiérarchie de volumes englobants de $|K_1|$ et $|K_1|$ respectivement muni des normales au sens fort associées. Dans le cas rigide, ces hiérarchies de volumes englobants peuvent être entièrement pré-calculées. Dans le cas d'un corps déformable représenté par un complexe simplicial fini $K$, la solution suivante est applicable :

- utiliser une hiérarchie $H'$ sur la partition de $|K|$ pour former les intérieurs simpliciaux des faces de $K$ pour construire une hiérarchie de volumes englobants $H$ pour un état de déformation de référence ;
- conserver entre deux états déformés de la même structure une hiérarchie de volumes englobants basée sur $H'$ et simplement remettre à jour la géométrie de chaque volume englobant afin de s'adapter aux déformations des faces de $K$.

L'utilisation de hiérarchie de volumes englobants est une technique classique dans le domaine de la détection de collision. L'invention utilise une méthode qui améliore celle proposée par le document [1].

On décrira maintenant de façon détaillée l'étape de pré-calcul du procédé selon l'invention.

Dans toute la suite, on suppose que $n$ est un entier fixé, égal à 2 ou à 3.

Les données d'entrée sont construites par une famille finie de complexes simpliciaux de R$^n$.

Les données de sortie comprennent :

Pour chaque face $\sigma$ de chaque complexe simplicial *K*:

- une description géométrique du cône polyédrique $n_{|K|}(\mathrm{Int}\,\sigma)$ ;
- le label de la classe de contact à laquelle appartient la face.

Pour chaque complexe simplicial d'entrée *K* : un arbre de volumes englobants du corps du complexe simplicial muni des normales au sens fort associées. Les volumes englobants sont donc des parties de R"xR". Dans l'invention, chaque volume englobant utilisé est le produit cartésien d'une boule de R$^n$ et d'un cône R$^n$. Dans le cas de R$^3$, les cônes considérés sont des cônes de révolution, simples ou doubles, d'ouverture éventuellement nulle (demi-droite ou droite complète). Dans le cas de R$^2$, les cônes considérés s'obtiennent à partir du cas tridimensionnel par intersection des cônes avec un plan contenant leur axe de révolution.

A chaque noeud feuille de l'arbre sont associées une ou plusieurs faces de *K*. Une face de *K* est associée à au plus une feuille de l'arbre. Les faces de *K* associées aux feuilles de l'arbre sont exactement les faces dont l'ensemble des normales au corps de *K* au sens fort associées est non vide. Le volume englobant associé à un noeud feuille recouvre la partie du corps de K, munie des normales associées, formée par l'union des intérieurs simpliciaux des faces de *K* associées à cette feuille.

A chaque noeud de l'arbre (qu'il soit un noeud feuille ou non), sont associés :

- un volume englobant qui recouvre la partie du corps de K, munie des normales associées, formée par l'union des intérieurs simpliciaux des faces de *K* associées aux feuilles de la branche de l'arbre engendrée par ce noeud ;
- pour chaque classe de contact de label *i* (de 0 à 7), une valeur booléenne égale à l'évaluation du prédicat suivant : il existe, parmi les feuilles de la branche de l'arbre engendrée par ce noeud, au moins une feuille à laquelle est associée au moins une face de *K* dont le label de la classe est *i*.

On décrira maintenant les traitements effectués pour chaque complexe simplicial *K* donné en entrée. On suppose que les coordonnées des sommets de *K* sont données dans un système de coordonnées fixé. Dans le cas d'un corps rigide, il est naturel et commode de choisir un repère lié à ce corps. Dans le cas d'un corps déformable, on pourra par exemple choisir un repère de référence pour fixer les coordonnées des sommets de *K* dans un état de déformation qui sera dit de référence (par exemple, l'état de repos pour un corps dont la loi de comportement est de type élastique).

Une première étape du prétraitement selon le procédé conforme à l'invention consiste en le calcul des normales au sens fort et des classes de contact.

Il s'agit, pour chaque face $\sigma$ de *K*, de calculer une description géométrique de $n_{|K|}(\mathrm{Int}\,\sigma)$. On rappelle le résultat suivant : $n_{|K|}(\sigma)=(\mathrm{DirAff}\,\sigma)^{\perp}\cap\{u_\sigma(\sigma),\ \sigma'\in\overline{\mathrm{St}}_K\sigma,\ \dim\sigma'=\dim\sigma+1\}^*$.

Plusieurs choix sont possibles pour représenter en machine un tel cône polyédrique. Compte tenu du fait que dans les calculs qui seront nécessaires lors de la phase de recherche des LMD, le sous-espace vectoriel $(\mathrm{DirAff}\,\sigma)^{\perp}$ n'a pas besoin d'être représenté en machine. Une représentation du cône convexe $\{u_{\sigma'}(\sigma),\ \sigma'\in\overline{\mathrm{St}}_K\sigma,\ \dim\sigma'=\dim\sigma+1\}^*$ suffit.

Dans le cas d'un corps rigide, on aura intérêt à travailler dans un système de coordonnées lié au corps et à utiliser une représentation polaire de $\{u_{\sigma'}(\sigma),\ \sigma'\in\overline{\mathrm{St}}_K\sigma,\ \dim\sigma'=\dim\sigma+1\}^*$, ce qui revient à représenter le cône convexe engendré

$$\left\{u_{\sigma'}(\sigma),\ \sigma'\in\overline{\mathrm{St}}_K\sigma,\ \dim\sigma'=\dim\sigma+1\right\}$$

par ses arêtes, c'est-à-dire par un sous-ensemble minimal de $\{u_\sigma(\sigma),\ \sigma'\in\overline{\mathrm{St}}_K\sigma,\ \dim\sigma'=\dim\sigma+1\}$ qui engendre le même cône convexe.

Dans le cas d'un corps déformable, le sous-ensemble des vecteurs qui dirigent les arêtes du cône convexe engendré par $\{u_\sigma(\sigma),\ \sigma'\in\overline{\mathrm{St}}_K\sigma,\ \dim\sigma'=\dim\sigma+1\}$ peut varier, donc il est plus rentable de conserver tous les $u_\sigma(\sigma)$ dans la représentation polaire.

A titre d'exemple, on peut examiner une face $\sigma$ qui est un sommet d'un complexe polyédrique dans R$^3$. On a alors :

$$\left( \operatorname{Dir} \operatorname{Aff} \sigma \right)^{\perp} = \mathrm{R}^{3}\,,$$

d'où :

$$n_{|K|}(\sigma) = \left\{ u_{\sigma'}(\sigma),\ \sigma' \in \overline{\operatorname{St}}_{K}\sigma,\ \dim \sigma' = 1 \right\}^{*}$$

Il s'agit maintenant de calculer les $u_\sigma(\sigma)$, puis d'en extraire un sous-ensemble minimal qui engendre le même cône convexe. Ceci peut se faire facilement en recherchant les plans qui composent les faces du cône convexe polyédrique engendré par $\{u_\sigma(\sigma),\ \sigma' \in \overline{\operatorname{St}}_K\sigma, \dim\sigma'=1\}$, ce qui revient à éliminer successivement les $u_\sigma(\sigma)$ qui ne sont pas des vecteurs directeurs d'une arête de ce cône. Ces plans sont engendrés par des couples de vecteurs indépendants pris parmi les $u_\sigma(\sigma)$, et sont tels que tous les autres $u_\sigma(\sigma)$ sont du même côté de ces plans.

Il y a plusieurs cas possibles.

1. $\{u_\sigma(\sigma),\ \sigma' \in \overline{\operatorname{St}}_K\sigma, \dim\sigma'=1\}$ est vide, donc $n_{|K|}(\sigma)$=R$^3$. La classe de contact de $\sigma$ est donc la classe de label 0.
2. $\{u_\sigma(\sigma),\ \sigma' \in \overline{\operatorname{St}}_K\sigma, \dim\sigma'=1\}$ ne possèdent pas de vecteurs indépendants. Deux sous-cas se présentent :

>   a. Tous les $u_\sigma(\sigma)$ sont de même sens. Dans ce cas il suffit d'en retenir un seul et le label de la classe de contact de $\sigma$ est 0.
>   b. Il existe des $u_\sigma(\sigma)$ de sens opposé. Alors le cône engendré par les $u_\sigma(\sigma)$ est une droite vectorielle et la classe de contact de $\sigma$ est de label 1.

3. Il existe un plan engendré par une paire de vecteurs $u_\sigma(\sigma)$ indépendants qui permet de mettre tous les autres $u_\sigma(\sigma)$ dans un même demi-espace ouvert. On peut alors montrer que le cône convexe engendré par les $u_\sigma(\sigma)$ ne contient aucune droite vectorielle. Il faut alors chercher les autres couples vecteurs $u_\sigma(\sigma)$ qui engendrent des plans satisfaisant à la même propriété. Les vecteurs concernés peuvent être ordonnés de manière circulaire, les autres sont dans l'intérieur du cône et ne font pas partie de la représentation minimale recherchée. La classe de contact de $\sigma$ est de label 0.
4. Il existe un plan engendré par une paire de vecteurs $u_\sigma(\sigma)$ indépendants qui permet de mettre tous les autres $u_\sigma(\sigma)$ dans un même demi-espace fermé, mais pas dans un même demi-espace ouvert. Dans ce plan se trouvent alors au moins trois $u_\sigma(\sigma)$. Trois cas se présentent :

>   a. les $u_\sigma(\sigma)$ contenus dans ce plan engendrent un cône convexe qui est égal à ce plan. Alors deux cas se présentent à nouveau :
>
>>   i. Il existe des $u_\sigma(\sigma)$ qui ne sont pas dans ce plan. Le cône convexe recherché est en fait un demi-espace délimité par le plan trouvé et la classe de contact de $\sigma$ est de label 3.
>>   ii. Tous les $u_\sigma(\sigma)$ sont dans le plan trouvé. Le cône convexe recherché est égal à ce plan et la classe de contact de $\sigma$ est de label 4.
>
>   b. les $u_\sigma(\sigma)$ contenus dans ce plan engendrent un cône convexe qui est égal à un demi-plan fermé. Alors deux cas se présentent à nouveau :
>
>>   i. Il existe des $u_\sigma(\sigma)$ qui ne sont pas dans ce plan. Alors le cône convexe engendré par les $u_\sigma(\sigma)$ a exactement deux faces, et il reste un plan exactement à trouver. La classe de contact de $\sigma$ est de label 1.
>>   ii. Tous les $u_\sigma(\sigma)$ sont dans ce plan. Le cône convexe recherché est exactement égal au demi-plan fermé rencontré et la classe de contact de $\sigma$ est de label 1.
>
>   c. les $u_\sigma(\sigma)$ contenus dans ce plan engendrent un cône convexe qui est un secteur angulaire plan strictement inclus dans un demi-plan. Alors seuls les vecteurs arêtes de ce secteur sont à retenir, et on se ramène au cas 3.

5. Aucun plan engendré par les paires de $u_\sigma(\sigma)$ ne permet de mettre tous les $u_\sigma(\sigma)$ dans un même demi-espace. Alors les $u_\sigma(\sigma)$ engendrent un cône convexe qui est en fait tout R$^3$, et on a $n_{|K|}(\sigma)$= Ø. La classe de contact de $\sigma$ est de label 7.

On décrira maintenant une deuxième étape du prétraitement selon le procédé conforme à l'invention. Cette deuxième étape concerne la construction de la hiérarchie de volumes englobants.

Plusieurs approches sont possibles pour la construction de la hiérarchie de volumes englobants. Principalement, on distingue classiquement les approches par subdivision successive (ou « top-down ») et par agrégation (ou « bottom-up »). On notera que le document [1] s'appuie sur la librairie PQP (voir les documents [4] et [5]) pour réaliser cette tâche. Or PQP ne s'appuie que sur la position des primitives géométriques (points, arêtes, triangles) pour la construction d'une hiérarchie, et n'utilise pas les normales associées.

L'invention propose d'utiliser à la fois la position des faces $\sigma$ du complexe simplicial et les ensembles de normales $n_{|K|}(\sigma)$ associés. Pour cela, il peut être utile de calculer préalablement un cône de révolution englobant pour chaque $n_{|K|}(\sigma)$, ce qui n'implique que des calculs géométrique élémentaires et ne pose pas de difficultés particulières à l'homme de l'art.

L'invention propose les étapes qui suivent, qui ont pour but la construction d'une hiérarchie (au sens ensembliste) de la partition du corps de $K$ formée par les intérieurs simpliciaux de ses faces. C'est un procédé « top-down », qui agit récursivement par subdivision d'ensembles d'éléments de cette partition, en partant de l'ensemble de tous les éléments de la partition qui sera donc associé à la racine de l'arbre. Le critère d'arrêt des itérations correspond au traitement des ensembles d'éléments de la partition de cardinal 1 (les singletons, c'est-à-dire un seul Int$\sigma$) qui se retrouvent associés aux feuilles de l'arbre.

Le procédé de subdivision prend la forme suivante : alternativement (ou selon une heuristique qui dépend du contexte d'utilisation) au sens de la position et de l'orientation, on réalise des subdivisions selon le critère classique de la médiane selon l'axe de plus grande inertie (voir par exemple le document [1]). « Au sens de la position » doit être compris comme l'utilisation des barycentres des $\sigma$. « Au sens de l'orientation » doit être compris comme l'utilisation des axes des cônes des révolution qui englobent les $n_{|K|}(\sigma)$.

Expérimentalement, une heuristique efficace est de réaliser les 3 ou 4 premières subdivisions selon la position, puis d'alterner entre position et orientation (stratégie de subdivision dite « splitting »).

Une fois la hiérarchie construite, il suffit de calculer des volumes englobants pour chaque noeud de la hiérarchie. En ce qui concerne les sphères qui englobent les positions des faces associées à un noeud, deux stratégies sont possibles :

1. Calculer la sphère de rayon minimal qui englobe les faces associées à chaque noeud.
2. Calculer des sphères minimales pour les feuilles de l'arbre, puis remonter successivement dans l'arbre par inclusion hiérarchique des sphères englobantes.

Dans les deux cas de figure, des méthodes classiques existent et sont disponibles dans la littérature. Dans le cas rigide, la solution 1 est plus efficace. Dans le cas déformable, la recherche d'efficacité dans la remise à jour de la hiérarchie de volume englobant privilégie une solution hybride : utiliser la solution 1 pour le « bas » de l'arbre, la solution 2 pour le « haut ». La distinction entre le haut et le bas de l'arbre peut se faire sur un critère de profondeur des noeuds, avec un seuil de profondeur à régler expérimentalement.

En ce qui concerne les cônes de révolution qui doivent englober les ensembles de normales des faces qui sont associées aux noeuds, une solution analogue à la solution 2 pour les solutions a l'avantage de la simplicité d'implémentation (il suffit de calculer des cônes qui englobent simplement des paires de cône).

Sur le plan de l'efficacité, il est également intéressant de remonter dans la hiérarchie de volumes englobants l'information d'appartenance de faces aux différentes classes de contact, comme annoncé plus haut. Cette remontée d'information permet de durcir les tests noeud à noeud qui seront décrits ci-dessous, et donc de rendre les descentes de hiérarchies plus sélectives, donc plus rapides. Cette remontée ne pose pas de problème particulier. Il suffit d'associer à chaque noeud une collection de huit valeurs booléennes qui indiquent, pour chacune des huit classes, l'existence parmi les faces associées au noeud d'au moins une face appartenant à la classe.

On remarque enfin que, dans le cas rigide uniquement, la classe de chaque face est définitivement déterminée à l'initialisation. Par conséquent, comme cela sera expliqué ci-dessous, les faces appartenant à la classe de label 7 peuvent être omises car elles ne peuvent être le support d'une LMD, ni même d'une quasi-LMD.

On décrira maintenant une étape du procédé selon l'invention qui suit le prétraitement et consiste en l'étape de calcul des (quasi)-LMD.

On introduit ici deux paramètres de la méthode qui peuvent être modifiés au besoin entre deux requêtes et dont la modification n'invalide pas l'étape de pré-calcul précédente.

Le premier paramètre, noté $\gamma_{max}$, est une valeur angulaire positive ou nulle qui permet de définir la notion de quasi-LMD (toute LMD est une quasi-LMD). Le deuxième paramètre, noté $d_{max}$, est un seuil de distance (positive ou nulle, éventuellement infinie) qui permet de restreindre le calcul des quasi-LMD aux seules quasi-LMD dont la valeur est inférieure à ce seuil.

On considère dans la suite deux complexes simpliciaux $K_1$ et $K_2$. L'opération qui est décrite ici pour une paire de complexes doit être appliquée à chaque paire de complexes distincts parmi les complexes donnés en entrée.

Cette étape de l'invention est analogue à celle de la méthode proposée dans le document [1] mais introduit les extensions suivantes :

- Les tests noeud à noeud prennent en compte les dilations éventuelles appliquées aux complexes $K_1$ et $K_2$, de valeurs respectives $\varepsilon_1$ et $\varepsilon_2$. Le test sur la position relative des noeud consiste donc à vérifier que les centres des sphères englobantes associées sont distants d'au plus $R_1 + R_2 + \varepsilon_1 + \varepsilon_2 + d_{max}$, où $R_1$ et $R_2$ sont les rayons des sphères. En revanche, le cône dual (selon le document [1]) se base sur les sphères non dilatées.

- Les tests noeud à noeud prennent en compte la tolérance au désalignement $\gamma_{max}$. Par conséquent, dans les tests d'intersection des différents cônes, les cônes de révolution qui englobent les normales doivent être remplacés par des cônes de même axe dont la demi-ouverture au sommet est augmentée de $\gamma_{max}$.

- Les tests noeud à noeud comportent un test supplémentaire basé sur les classes de contact. Supposons que les deux noeuds à tester comportent des vecteurs de booléens d'appartenance de leurs faces aux classes de contact notés $c_1$ et $c_2$. La $i$-ème composante d'un tel vecteur est un booléen qui indique s'il existe parmi les faces associées au noeud au moins une face appartenant à la classe de label $i$. Le test consiste à évaluer le booléen $c_1^T C c_2$, où $C$ est la matrice symétrique booléenne suivante, appelée matrice de compatibilité entre classes de contact :

$$
C = \begin{pmatrix}
1 & 1 & 1 & 1 & 1 & 1 & 1 & 0 \\
1 & 1 & 1 & 1 & 0 & 0 & 0 & 0 \\
1 & 1 & 1 & 1 & 0 & 0 & 0 & 0 \\
1 & 1 & 1 & 0 & 0 & 0 & 0 & 0 \\
1 & 0 & 0 & 0 & 0 & 0 & 0 & 0 \\
1 & 0 & 0 & 0 & 0 & 0 & 0 & 0 \\
1 & 0 & 0 & 0 & 0 & 0 & 0 & 0 \\
0 & 0 & 0 & 0 & 0 & 0 & 0 & 0
\end{pmatrix},
$$

- le test étant validé si et seulement si la valeur booléenne résultante est 1.

- Les tests feuille à feuille prennent en compte les dilatations des complexes et la tolérance au désalignement $\gamma_{max}$. Le principe pour réaliser ces tests est de calculer d'abord l'unique LMD entre les espaces affines engendrés par les deux faces testées (comme expliqué plus haut, les cas de parallélisme sont rejetés sans préjudice), puis de vérifier que son support se situe sur le produit des intérieurs simpliciaux des faces. Ceci correspond à des calculs géométriques élémentaires que l'homme de l'art maîtrise et qui sont détaillés dans par exemple le document [6]. Si une LMD $(x_1, x_2) \in \mathrm{Int}\sigma_1 \times \mathrm{Int}\sigma_2$ entre les intérieurs simpliciaux des faces est trouvée, il reste à vérifier, comme expliqué plus haut, que celle-ci est compatible avec les cônes de normales au sens fort associées aux intérieurs simpliciaux des faces, i.e. de tester si $x_2 - x_1$ appartient à $n_{|K_1|}(\mathrm{Int}\sigma_1)$ et si $x_1 - x_2$ appartient à $n_{|K_2|}(\mathrm{Int}\sigma_2)$. Ce test est facile à réaliser car l'étape de pré-calcul a permis d'obtenir une représentation de $n_{|K_1|}(\mathrm{Int}\sigma_1)$ et de $n_{|K_2|}(\mathrm{Int}\sigma_2)$ sous la forme du polaire d'un ensemble fini de vecteurs du type $u_\sigma(\sigma)$. La contrainte d'appartenance à ce cône polaire doit être assouplie pour tenir compte d'un désalignement maximal de $\gamma_{max}$, ce qui peut être approché de manière simple en considérant non pas le cône polaire aux vecteurs $u_\sigma(\sigma)$ (i.e. l'ensemble des vecteurs qui forment un angle d'au moins $\dfrac{\pi}{2}$ avec chaque $u_\sigma(\sigma)$), mais l'ensemble des vecteurs qui forment un angle d'au moins $\dfrac{\pi}{2} - \gamma_{max}$ avec chaque $u_\sigma(\sigma)$. Cet assouplissement ne doit pas être fait dans tous les cas, mais doit obéir aux règles fixées par le tableau 5 suivant.

## Tableau 5

| Label de la classe de contact de $\sigma_2$ / Label de la classe de contact de $\sigma_1$ | 0 | 1 | 2 | 3 | 4 | 5 | 6 | 7 |
|---|---|---|---|---|---|---|---|---|
| 0 | (0, 0) | (0, 0) | (1, 0) | (1, 0) | (1, 0) | (1, 0) | (1, 0) | Ø |
| 1 | (0, 0) | (1, 1) | (1, 1) | (1, 0) | Ø | Ø | Ø | Ø |
| 2 | (0, 1) | (1, 1) | (1, 1) | (1, 0) | Ø | Ø | Ø | Ø |
| 3 | (0, 1) | (0, 1) | (0, 1) | Ø | Ø | Ø | Ø | Ø |
| 4 | (0, 1) | Ø | Ø | Ø | Ø | Ø | Ø | Ø |
| 5 | (0, 1) | Ø | Ø | Ø | Ø | Ø | Ø | Ø |
| 6 | Ø | Ø | Ø | Ø | Ø | Ø | Ø | Ø |
| 7 | Ø | Ø | Ø | Ø | Ø | Ø | Ø | Ø |

Le Tableau 5 montre les règles de régularisation angulaires permettant de définir les quasi-LMD. Le tableau doit être utilisé comme un tableau à double entrée. Dans chaque case du tableau se trouvent soit un couple de valeurs booléennes, soit le symbole Ø. Si un couple de valeurs booléennes est présent dans une case, la première valeur (resp. la deuxième valeur) indique si le cône polaire aux vecteurs $u_\sigma(\sigma)$ associé à la face $\sigma_1$ (resp. $\sigma_2$) doit être remplacé par l'ensemble décrit plus haut et paramétré par la valeur de $\gamma_{max}$. Le symbole Ø identifie les cas qui doivent être rejetés (cas inutiles évoqués plus haut).

Dans le cas des corps déformables, la géométrie des volumes englobants (sphères et cônes de révolution) doit être remise à jour après modification de l'état de déformation, ce qui n'ajoute pas de difficulté car les méthodes classiques de remise à jour s'appliquent directement.

Selon une variante de l'invention, on calcule non seulement les distances entre objets, pour mettre en évidence les zones de proximité, mais également les vitesses de déplacement relatifs, ce qui permet d'adapter automatiquement et localement les seuils de distance.

Selon une autre variante de l'invention, les calculs sont parallélisés pour exploiter au mieux une architecture parallèle, par exemple à base de processeurs multi-coeurs, afin d'accélérer les simulations temps réel.

Selon une autre variante de l'invention, le procédé est généralisé aux objets représentés par un axe médian polyédrique (voir par exemple les documents [7] et [8]).

Un avantage du procédé selon l'invention utilisant des quasi-LMD est d'être régularisé vis-à-vis des translations et des rotations, ce qui conduit à des solutions très robustes vis-à-vis des déplacements et des rotations des objets virtuels. Le rendu graphique et/ou haptique n'est donc pas déstabilisé par l'interaction avec l'utilisateur qui est par nature peu prévisible.

Un autre avantage du procédé est de permettre des calculs rapides, et donc de pouvoir être intégré dans un simulateur temps réel. L'invention permet ainsi une simulation stable du comportement mécanique, sans oscillations parasites.

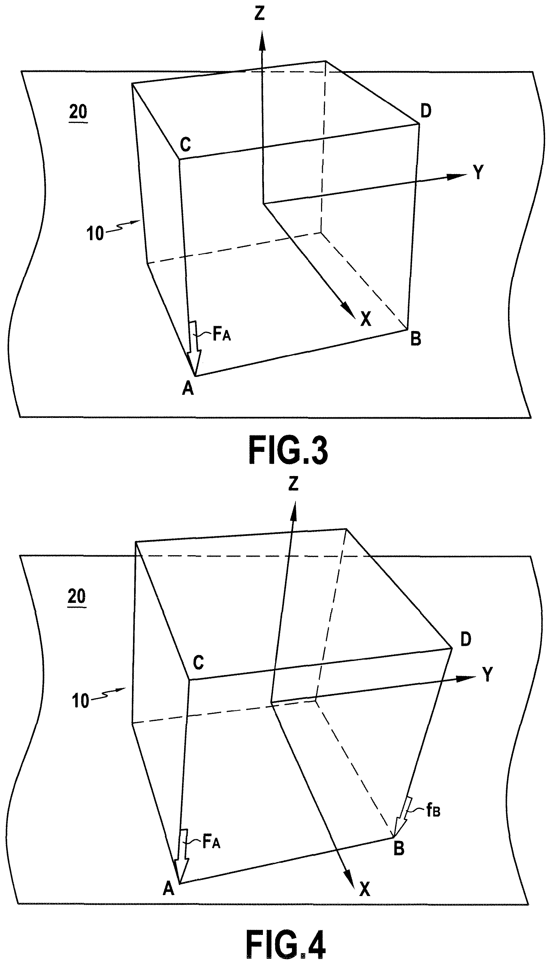

Un exemple de réalisation du procédé selon l'invention sera présenté en référence aux Figures 3 à 7.

Ces Figures montrent les images de deux objets 10, 20 simulés numériquement, à savoir un cube 10 et un plan 20, mais l'invention est naturellement applicable à des objets de formes très variées.

Les Figures 3 à 7 montrent diverses visualisations des zones de contact ou de proximité entre les deux objets virtuels, lorsqu'il existe un mouvement relatif entre ces objets.

Sur les Figures 3 à 7, on a représenté un repère XYZ associé à l'objet cubique 10. Dans l'exemple considéré, on a considéré que le plan 20 est fixe et que les mouvements relatifs entre les deux objets 10 et 20 ne sont déterminés que par les déplacements (rotations ou translations) de l'objet cubique 10.

L'objet cubique 10 comprend une face qui présente des coins ABCD.

Lorsqu'un coin A du cube 10 s'approche du plan 20 (Figure 3), on visualise la zone de contact et/ou le contact le plus proche situé dans le coin A du cube 10 le plus proche du plan 20. Sur la Figure 3, ceci est matérialisé par une grande flèche $F_A$.

Lors d'une rotation du cube 10 (Figure 4), un autre coin B s'approche de la surface du plan 20. Ceci est matérialisé par une petite flèche $F_B$.

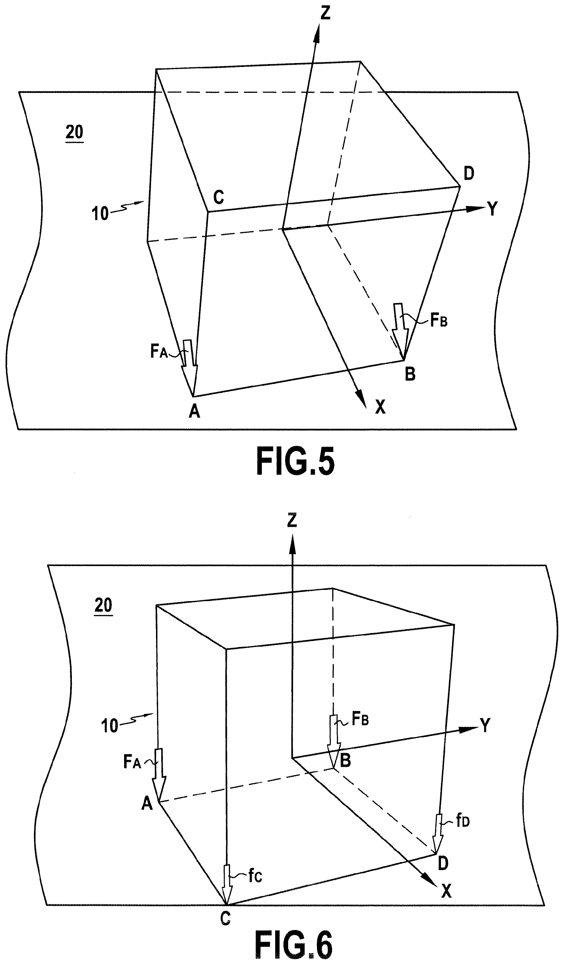

On passe ensuite par une étape intermédiaire où une arête (Figure 5) (ou le cas échéant une face) du cube 10 est parallèle au plan 20. Ainsi, sur la Figure 5, tous les points de l'arête situés entre les coins A et B présentent la même distance par rapport au plan 20. Ceci est matérialisé par les grandes flèches $F_A$, $F_B$ aux coins A et B. Le système visualise alors l'arête entière (ou la face) du cube 10 qui est parallèle au plan 20.

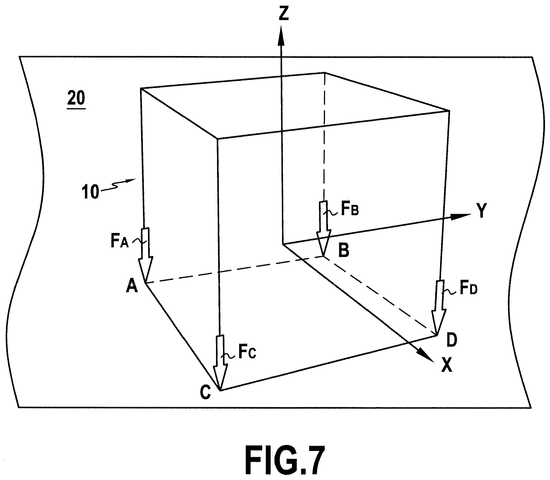

Si la rotation du cube 10 se poursuit (Figure 6), on repasse à une situation symétrique à celle du début, par exemple les coins C et D du cube 10 se rapprochent du plan 20 alors que les coins A et B restent à une certaine distance du plan 20. Les petites flèches $f_C$ et $f_C$ symbolisent le rapprochement des coins C et D vers le plan 20. A la fin de cette rotation (Figure 7), dans l'exemple donné, on a la face du cube 10 délimitée par les coins A, B, C, D qui est parallèle au plan 20. Cette même distance est matérialisée par de grandes flèches $F_A$, $F_B$, $F_C$, $F_D$ aux coins A, B, C, D.

Selon l'art antérieur, on serait passé de manière discontinue d'un coin du cube à l'autre, avec une forte instabilité en fonction d'une petite variation angulaire du cube.

Selon l'invention, on passe au contraire de manière continue d'un point A du cube 10 à l'arête AB, puis à l'autre coin B, puis à une face A, B, C, D, de manière non seulement continue, mais régularisée vis-à-vis de petites rotations angulaires de l'objet, et vis-à-vis de petites translations.

Cet exemple permet d'illustrer l'efficacité de la solution de l'invention. En effet, dans le cas dans le cas de contact entre un objet concave et un autre objet, les solutions antérieures présentent des instabilités qui se traduisent par exemple par une oscillation entre différents points de contact (cas du tabouret incliné dont le point de contact passe d'un pied à l'autre, ou du cube sur un plan). Au contraire selon l'invention, les zones de proximité sont identifiées avant et/ou après un contact, ce qui supprime les instabilités liées à la détection limitée aux contacts ponctuels.

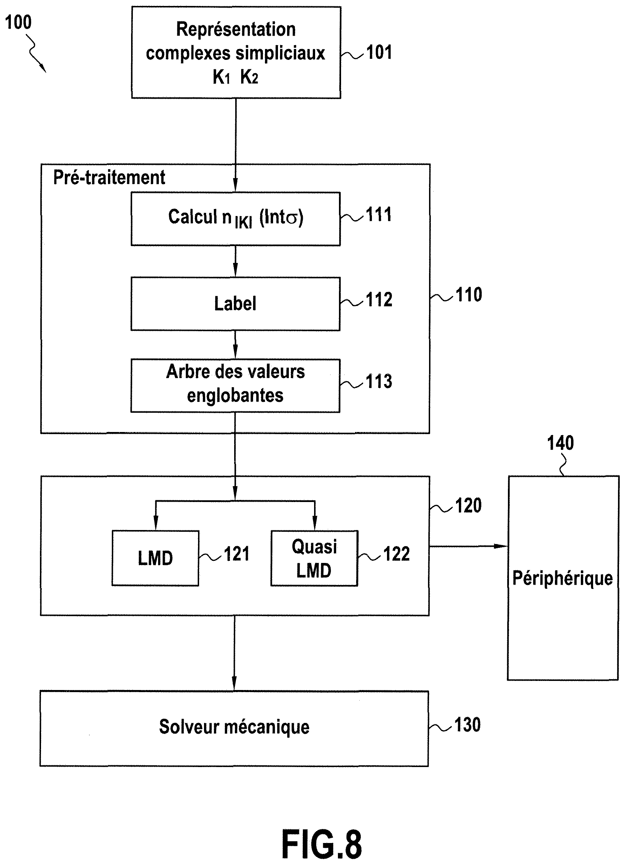

On a représenté sur la Figure 8 un exemple de dispositif 100 permettant de mettre en oeuvre le procédé selon l'invention.

Le dispositif comprend un module 101 permettant de représenter sous une forme numérique des objets qui peuvent être définis sous la forme de complexes simpliciaux $K_1$, $K_2$ dans $R^n$ où n est égal à 2 ou à 3.

Le dispositif 100 de détection de collision et de construction d'informations géométriques de contact ou de proximité entre un nombre fini d'objets virtuels comprend un module 110 de prétraitement et un module 120 de traitement proprement dit.

Le module de prétraitement 110 pour chaque complexe simplicial K, dont les coordonnées des sommets sont données dans un système de coordonnées fixé, comprend des moyens de calcul 111, pour chaque face 6 de chaque complexe simplicial K, d'une description géométrique du cône polyédrique correspondant aux normales au sens fort $n_{|K|}$ (Int $\sigma$) associées à cette face, des moyens 112 de détermination du label de la classe de contact à laquelle appartient cette face ($\sigma$) et des moyens 113 de détermination pour chaque complexe simplicial K d'un arbre de volumes englobants de l'objet du complexe simplicial K à partir à la fois de la position des faces $\sigma$ du complexe simplicial K et des ensembles de normales au sens fort associées $n_{|K|}(\sigma)$.

Le module de traitement 120 comprend des moyens de calcul utilisant les résultats du module de prétraitement 110 et permet de procéder à un calcul de distances minimales locales (LMD) et de quasi-distances minimales locales (quasi-LMD) de la façon exposée plus haut.

L'ensemble des modules 101, 110, 120 est avantageusement couplé à un solveur mécanique 130.

L'ensemble des modules 101, 110, 120 et du solveur mécanique 130 est préférentiellement couplé à un périphérique 110 constitué par une interface graphique utilisateur et/ou à un ou plusieurs autres périphériques 140 tels que par exemple : souris 2D classique, souris 3D à six degrés de liberté, périphérique de capture de mouvements, périphérique de réalité virtuelle, interface à retour d'effort, interface tactile, interface sonore.

En effectuant une évaluation de quasi-distances minimales locales entre les objets virtuels, l'invention permet la construction d'un espace de contact régularisé entre les objets, les objets virtuels modélisant des corps solides qui peuvent être rigides ou déformables, et définis dans un espace tridimensionnel ou bidimensionnel.

Le problème de la détection de collisions entre des corps $C_1$ et $C2_2$ possède plusieurs formulations, chacune d'elles correspondant à "type de requête". Les types de requête les plus fréquemment rencontrés sont les suivants :

- requête d'interférence : évaluation du prédicat $C_1 \cap C_2 \neq \varnothing$.
- calcul d'interférence : détermination du compact $C_1 \cap C_2$.

Lorsque $C_1$ et $C_2$ sont disjoints :

- requête de proximité globale ou calcul de distance de séparation (ou distance minimale globale) : rechercher les couples de points $(a,b) \in C_1 x C_2$ qui réalisent $\min\limits_{(a,b) \in C_1 x C_2} d(a,b)$.

- requête de proximité globale ou calcul des distances minimales locales : recherche de tous les minima locaux de la fonction

$$d_{C_1 \, C_2} : \left| \begin{array}{l} C_1 \times C_2 \to R \\ (a,b) \mapsto d(a,b) \end{array} \right.$$

Lorsque $C_1$ et $C_2$ sont de dimension topologique n et en interférence :

- Calcul de profondeur d'interpénétration globale : recherche d'un vecteur de norme minimal tel que l'image de $C_1$ par la translation selon ce vecteur est disjointe de $C_2$.
- Calcul de profondeur d'interpénétration locale : même calcul, en remplaçant $C_1$ (resp. $C_2$) par l'intersection de $C_1$ (resp. $C_2$) avec un voisinage d'une composante connexe de $C_1 \cap C_2$.

Lorsque $C_1$ et $C_2$ sont disjoints :

- Calcul de la date d'impact : en supposant que $C_1$ est en mouvement par rapport à $C_2$ selon une trajectoire paramétrée par le temps et supposant que $C_1$ et $C_2$ sont initialement disjoints, calculer, s'il existe, la date de l'instant le plus précoce où $C_1$ et $C_2$ entrent en interférence.
- Calcul du point d'impact : déterminer le compact $C_1 \cap C_2$ à la date de l'impact.

L'invention permet de prendre en compte ces diverses requêtes et concerne plus particulièrement le calcul des distances minimales locales entre deux ensembles de primitives élémentaires :

- en dimension deux, les primitives élémentaires sont le point et le segment de droite (appelé arête).
- en dimension deux, les primitives élémentaires sont le point, le segment de droite (appelé arête) et le triangle.

Dans le cas où l'application visée est la construction d'un espace de contact entre solides rigides ou déformables géométriquement représentés par de tels ensembles, l'invention prend également en compte les problèmes :

- de la régularisation de l'espace de contact construit à partir des distances minimales locales ;
- de la minimisation de la dimension de cet espace dans le cas de contacts glissants entre corps rigides.

Si l'espace de contact n'est pas régularisé et qu'une méthode de résolution du problème de contact de type "time stepping" est utilisée, alors des instabilités peuvent être observées, notamment dans le cas de contacts conformants. La présente invention permet de résoudre ce problème et de traiter le cas des contacts conformants.

Dans le cas où le modèle de contact entre corps est glissant et que les corps sont rigides, la dimension de l'espace de contact peut être réduite sans changer le problème de contact.

Le procédé selon l'invention permet d'apporter des améliorations par rapport à l'art antérieur sous plusieurs aspects.

En particulier,

- on calcule de manière bien définie et rigoureuse le domaine de valuation du champ de normales sur chaque primitive élémentaire ;
- les primitives considérées dans toute la méthode sont les points, les arêtes (privées de leurs extrémités) et les triangles (privés de leurs arêtes), un volume englobant feuille ne contient qu'une seule primitive ;
- la construction de l'arbre de volumes englobants est réalisée de haut en bas, par division successive, basée non seulement sur la position des primitives mais aussi sur leur orientation ;
- les volumes englobants au sens de l'orientation sont des cônes de révolution simples ou doubles ;
- les cas traités comprennent notamment le cas des surfaces polyédriques à bord libre en dimension trois, et le cas des courbes polygonales en dimension deux ;
- on peut aussi traiter le cas, en dimension trois, des volumes représentés par leur enveloppe polyédrique et le cas, en dimension deux, des aires représentées par leur contour polygonal ;
- en remplaçant la condition d'intersection des cônes primaux et duaux par une condition de proximité dépendante du type de domaine, on régularise vis-à-vis des rotations les espaces de contact construits à partir des distances minimales locales. Celles-ci sont alors remplacées par des quasi-distances minimales locales par rapport aux rotations. Cette notion de régularisation est l'analogue de la régularisation que constituent les distances minimales locales des contacts stricts vis-à-vis des translations ;
- Dans le cas des corps rigides en contact glissant : en ne retenant que les quasi-distances minimales locales qui s'appuient sur des couples de primitives relativement strictement convexes, on réduit la dimension des espaces de contacts régularisés basés sur les quasi-distances minimales locales. Cette suppression est réalisée grâce à une classification des primitives élémentaires selon leur nature et selon la dimension topologique de leur domaine de valuation. Une condition de compatibilité est établie entre classes de primitives. L'information de présence dans un noeud de l'arbre de primitives de chaque classe est calculée et un test de compatibilité est ajouté aux tests de proximité entre noeuds lors de la descente des arbres.

Documents de référence

[1]  D. Johnson and E. Cohen. Spatialized Normal Cone Hierarchies. In Proc. 2001 ACM Symposium on Interactive 3D Graphics, Research Triangle Park, NC, March 19-21, 2001. pp. 129-134.

[2]  J. R. Munkres. Elements of Algebraic Topology, Advanced Book Program, Perseus Publishing, Cambridge, Massachussetts, 1984.

[3]  D. P. Bertsekas. Convex Analysis and Optimization, Athena Scientific, Belmont, Massachussetts, 2003.

[4]  E. Larsen, S. Gottschalk, M. Lin, and D. Manocha. Fast Proximity Queries with Swept Sphere Volumes, Technical report TR99-018, Department of Computer Science, University of N. Carolina, Chapel Hill.

[5]  http://www.cs.unc.edu/~geom/SSV/

[6]  C. Ericson. Real Time Collision Detection. Elsevier, MK Press, 2005.

[7]  Nina Amenta, Sunghee Choi and Ravi Kolluri The Power CrustSixth ACM Symposium on Solid Modeling and Applications 2001, pages 249-260.

[8]  Nina Amenta, Sunghee Choi and Ravi Kolluri The Power Crust, unions of balls, and the medial axis transform-Computation Geometry: Theory and Applications, 2001, 19(2-3), pages 127-153, (special issue on surface reconstruction).

[9]  G. Zachmann,
Process and device for collision detection of objects. United States Patent, No. US 6,862,026 B2, Mar. 1, 2005.

**EP 2 081 740 B1**

**Revendications**

1. Procédé de détection de collision et de construction d'informations géométriques de contact et de proximité entre au moins un premier objet polyédrique simulé numériquement (10) et au moins un deuxième objet polyédrique simulé numériquement (20),
caractérisé en ce que l'on représente les premier et deuxième objets polyédriques simulés numériquement (10, 20) sous la forme de complexes simpliciaux ($K_1$, $K_2$) dans $R^n$, où $R^n$ désigne le produit cartésien du corps des réels n fois par lui-même, avec n égal à 2 ou à 3,
en ce que l'on effectue une étape de prétraitement pour chaque complexe simplicial (K) dont les coordonnées des sommets sont données dans un système de coordonnées fixé,
en ce que ce prétraitement consiste au moins à calculer pour chaque face ($\sigma$) de chaque complexe simplicial (K) une description géométrique du cône polyédrique correspondant aux normales au sens fort ($n_{|K|}$ (Int $\sigma$)) associées à cette face ($\sigma$), à déterminer le label de la classe de contact à laquelle appartient cette face ($\sigma$) et à déterminer pour chaque complexe simplicial (K) un arbre de volumes englobants de l'objet du complexe simplicial (K) à partir à la fois de la position des faces ($\sigma$) du complexe simplicial (K) et des ensembles de normales au sens fort associées ($n_{|K|}$ ($\sigma$)),
et en ce que, à partir des informations obtenues à l'issue de l'étape de prétraitement, on procède à un calcul de distances minimales locales (LMD) et de quasi-distances minimales locales (quasi-LMD), ces dernières correspondant chacune à un couple de points appartenant respectivement à des objets distincts et qui définiraient une distance minimale locale (LMD) si la position d'un objet par rapport à l'autre subissait une rotation d'un angle faible ($\gamma_{max}$) inférieur à un seuil donné.

2. Procédé selon la revendication 1, caractérisé en ce que au moins l'un des objets polyédriques simulés numériquement (10) est rigide.

3. Procédé selon la revendication 1, caractérisé en ce que au moins l'un des objets polyédriques simulés numériquement (10) est déformable.

4. Procédé selon l'une quelconque des revendications 1 à 3, caractérisé en ce que les étapes de prétraitement et de calcul des distances minimales locales (LMD) et des quasi-distances minimales locales (quasi-LMD) sont effectuées en temps réel.

5. Système de détection de collision et de construction d'informations géométriques de contact et de proximité entre au moins un premier objet polyédrique simulé numériquement (10) et au moins un deuxième objet polyédrique simulé numériquement (20),
caractérisé en ce qu'il comprend des moyens (101) pour représenter les premier et deuxième objets polyédriques simulés numériquement (10, 20) sous la forme de complexes simpliciaux ($K_1$, $K_2$) dans $R^n$, où $R^n$ désigne le produit cartésien du corps des réels n fois par lui-même, avec n égal à 2 ou à 3,
en ce qu'il comprend des moyens de prétraitement (110) pour chaque complexe simplicial (K) dont les coordonnées des sommets sont données dans un système de coordonnées fixé,
en ce que ces moyens de prétraitement (110) comprennent au moins des moyens de calcul (111) pour chaque face ($\sigma$) de chaque complexe simplicial (K) d'une description géométrique du cône polyédrique correspondant aux normales au sens fort ($n_{|K|}$ (Int $\sigma$)) associées à cette face ($\sigma$), des moyens (112) de détermination du label de la classe de contact à laquelle appartient cette face ($\sigma$) et des moyens (113) de détermination pour chaque complexe simplicial (K) d'un arbre de volumes englobants de l'objet du complexe simplicial (K) à partir à la fois de la position des faces ($\sigma$) du complexe simplicial (K) et des ensembles de normales au sens fort associées ($n_{|K|}$ ($\sigma$)),
et en ce qu'il comprend des moyens de calcul (120) associés aux moyens de prétraitement (110), pour procéder à un calcul de distances minimales locales (LMD) et de quasi-distances minimales locales (quasi-LMD), ces dernières correspondant chacune à un couple de points appartenant respectivement à des objets distincts et qui définiraient une distance minimale locale (LMD) si la position d'un objet par rapport à l'autre subissait une rotation d'un angle faible ($\gamma_{max}$) inférieur à un seuil donné.

6. Système selon la revendication 5, caractérisé en ce qu'il est couplé à un solveur mécanique (130).

7. Système selon la revendication 6, caractérisé en ce qu'il est couplé à au moins un périphérique (140) comprenant une interface graphique utilisateur, une souris, un périphérique de capture de mouvement, une interface à retour d'effort, une interface tactile, une interface sonore.

**Patentansprüche**

1. Verfahren zur Erfassung einer Kollision und zum Aufbau von geometrischen Informationen zu Kontakt und Nähe zwischen mindestens einem ersten digital simulierten polyedrischen Objekt (10) und mindestens einem zweiten digital simulierten polyedrischen Objekt (20), **dadurch gekennzeichnet, dass** die ersten und zweiten digital simulierten polyedrischen Objekte (10, 20) in Form von Simplizialkomplexen ($K_1$, $K_2$) in $R^n$ dargestellt sind, wobei $R^n$ das kartesische Produkt des Körpers der reellen Zahlen n-mal mal sich selbst ist, wobei n gleich 2 oder 3 ist, dass ein Vorbearbeitungsschritt für jeden Simplizialkomplex (K), dessen Koordinaten der Spitzen in einem festgesetzten Koordinatensystem angegeben sind, durchgeführt wird, dass diese Vorbearbeitung zumindest darin besteht, für jede Seite ($\sigma$) jedes Simplizialkomplexes (K) eine geometrische Beschreibung des polyedrischen Konus entsprechend den Normalen im strengen Sinn ($n_{|K|}$ (Int $\sigma$)), die dieser Seite ($\sigma$) zugeordnet sind, zu berechnen, das Label der Kontaktklasse, der diese Seite ($\sigma$) angehört, zu bestimmen, und für jeden Simplizialkomplex (K) einen Baum von umgebenden Volumina des Objekts des Simplizialkomplexes (K) sowohl aus der Position der Seiten ($\sigma$) des Simplizialkomplexes (K) als auch den Gesamtheiten von im strengen Sinn zugehörigen Normalen ($n_{|K|}$ (Int $\sigma$)) zu bestimmen, und dass aus den nach dem Vorbearbeitungsschritt erhaltenen Informationen eine Berechnung von lokalen Mindestabständen (LMD) und lokalen Mindest-Quasiabständen (quasi-LMD) durchgeführt wird, wobei diese letztgenannten jeweils einem Punktepaar entsprechen, die jeweils unterschiedlichen Objekten zugeordnet sind, und die einen lokalen Mindestabstand (LMD) definieren würden, wenn die Position eines Objekts in Bezug zum anderen einer Drehung um einen kleinen Winkel ($\gamma_{max}$), der kleiner als die gegebene Schwelle ist, unterzogen wird.

2. Verfahren gemäß Anspruch 1, **dadurch gekennzeichnet, dass** mindestens eines der digital simulierten polyedrischen Objekte (10) starr ist.

3. Verfahren gemäß Anspruch 1, **dadurch gekennzeichnet, dass** mindestens eines der digital simulierten polyedrischen Objekte (10) verformbar ist.

4. Verfahren gemäß einem der Ansprüche 1 bis 3, **dadurch gekennzeichnet, dass** die Schritte der Vorbearbeitung und Berechnung der lokalen Mindestabstände (LMD) und der lokalen Mindest-Quasi-Abstände (quasi-LMD) in Echtzeit erfolgen.

5. System zur Erfassung einer Kollision und zum Aufbau von geometrischen Informationen zu Kontakt und Nähe zwischen mindestens einem ersten digital simulierten polyedrischen Objekt (10) und mindestens einem zweiten digital simulierten polyedrischen Objekt (20), **dadurch gekennzeichnet, dass** es Mittel (101) umfasst, um die ersten und zweiten digital simulierten polyedrischen Objekte (10, 20) in Form von Simplizialkomplexen ($K_1$, $K_2$) in $R^n$ darzustellen, wobei $R^n$ das kartesische Produkt des Körpers der reellen Zahlen n-mal mal sich selbst ist, wobei n gleich 2 oder 3 ist, dass es Mittel (110) zur Vorbearbeitung für jeden Simplizialkomplex (K), dessen Koordinaten der Spitzen in einem festgesetzten Koordinatensystem angegeben sind, umfasst, dass diese Mittel zur (110) Vorbearbeitung zumindest Mittel (111) umfassen, um für jede Seite ($\sigma$) jedes Simplizialkomplexes (K) eine geometrische Beschreibung des polyedrischen Konus entsprechend den Normalen im strengen Sinn ($n_{|K|}$ (Int $\sigma$)), die dieser Seite ($\sigma$) zugeordnet sind, zu berechnen, Mittel (112), um das Label der Kontaktklasse, der diese Seite ($\sigma$) angehört, zu bestimmen, und Mittel (113), um für jeden Simplizialkomplex (K) einen Baum von umgebenden Volumina des Objekts des Simplizialkomplexes (K) sowohl aus der Position der Seiten ($\sigma$) des Simplizialkomplexes (K) als auch den Gesamtheiten von im strengen Sinn zugehörigen Normalen ($n_{|K|}$ (Int $\sigma$)) zu bestimmen, und dass es Mittel (120) umfasst, die den Vorbearbeitungsmitteln (110) zugeordnet sind, um eine Berechnung von lokalen Mindestabständen (LMD) und lokalen Mindest-Quasiabständen (quasi-LMD) durchzuführen, wobei diese letztgenannten jeweils einem Punktepaar entsprechen, die jeweils unterschiedlichen Objekten zugeordnet sind, und die einen lokalen Mindestabstand (LMD) definieren würden, wenn die Position eines Objekts in Bezug zum anderen einer Drehung um einen kleinen Winkel ($\gamma_{max}$), der kleiner als die gegebene Schwelle ist, unterzogen wird.

6. System gemäß Anspruch 5, **dadurch gekennzeichnet, dass** es mit einem mechanischen Löser (130) gekoppelt ist.

7. System gemäß Anspruch 6, **dadurch gekennzeichnet, dass** es mit mindestens einem Peripheriegerät (140) gekoppelt ist, umfassend eine Benutzer-Grafikschnittstelle, eine Maus, ein Peripheriegerät zur Bewegungserfassung, eine Schnittstelle mit Kraftrückkopplung, eine Touch-Schnittstelle, eine Sound-Schnittstelle.

**Claims**

1. A method of detecting collision between at least one first numerically-simulated polyhedral object (10) and at least one second numerically-simulated polyhedral object (20) and of constructing geometrical information about proximity and contact between them;
the method being **characterized in that** the first and second numerically-simulated polyhedral objects (10, 20) are represented in the form of simplicial complexes ($K_1$, $K_2$) in $R^n$, where $R^n$ designates the Cartesian product of the body of real numbers multiplied by itself n times, with *n* equal to 2 or 3;

   • **in that** a pre-processing step is carried out for each simplicial complex (K) for which the coordinates of the vertices are given in a fixed system of coordinates;
   • **in that** this pre-processing consists at least in calculating for each face ($\sigma$) of each simplicial complex (K) a geometrical description of the polyhedral cone corresponding to the normals in the strong sense ($n_{|K|}$ (Int $\sigma$)) associated with that face ($\sigma$), determining the label of the contact class to which that face ($\sigma$) belongs, and determining for each simplicial complex (K) a tree of encompassing volumes of the object of the simplicial complex (K) from both the position of the faces ($\sigma$) of the simplicial complex (K) and the sets of associated normals in the strong sense ($n_{|K|}$ ($\sigma$)); and
   • **in that**, from information obtained after the pre-processing step, calculating local minimum distances (LMD) and quasi local minimum distances (quasi-LMD), each quasi local minimum distance corresponding to a pair of points belonging to respective distinct objects and that would define a local minimum distance (LMD) if the position of one object relative to the other were subject to a rotation by a small angle ($\gamma_{max}$) below a given threshold.

2. A method according to claim 1, **characterized in that** at least one numerically-simulated polyhedral object (10) is rigid.

3. A method according to claim 1, **characterized in that** at least one numerically-simulated polyhedral object (10) is deformable.

4. A method according to any one of claims 1 to 3, **characterized in that** the pre-processing step and the step of calculating local minimum distances (LMD) and quasi local minimum distances (quasi-LMD) are effected in real time.

5. A system for detecting collision between at least one first numerically-simulated polyhedral object (10) and at least one second numerically-simulated polyhedral object (20) and for constructing geometrical information about proximity and contact between them;
the system being **characterized in that** it includes means for representing the first and second numerically-simulated polyhedral objects (10, 20) in the form of simplicial complexes ($K_1$, $K_2$) in $R^n$, where $R^n$ designates the Cartesian product of the body of real numbers multiplied by itself *n* times, with *n* equal to 2 or 3;

   • **in that** it includes pre-processing means (110) for each simplicial complex (K) for which the coordinates of the vertices are given in a fixed system of coordinates;
   • **in that** the pre-processing means (110) comprise at least means (111) for calculating for each face ($\sigma$) of each simplicial complex (K) a geometrical description of the polyhedral cone corresponding to the normals in the strong sense ($n_{|K|}$ (Int $\sigma$)) associated with that face ($\sigma$), means for determining the label of the contact class to which that face ($\sigma$) belongs, and means for determining for each simplicial complex (K) a tree of encompassing volumes of the object of the simplicial complex (K) from both the position of the faces ($\sigma$) of the simplicial complex (K) and the sets of associated normals in the strong sense ($n_{|K|}$ ($\sigma$)); and
   • **in that** it comprises calculation means (120) associated with the pre-processing means (110) for calculating local minimum distances (LMD) and quasi local minimum distances (quasi-LMD), each quasi local minimum distance corresponding to a pair of points belonging to respective distinct objects and that would define a local minimum distance (LMD) if the position of one object relative to the other were subject to a rotation by a small angle ($\gamma_{max}$) below a given threshold.

6. A system according to claim 5, **characterized in that** it is coupled to a mechanical solver (130).

7. A system according to claim 6, **characterized in that** it is coupled to at least one peripheral (140) comprising a graphical user interface, a mouse, a movement capture peripheral, a force feedback interface, a touch-sensitive interface, an audio interface.

# FIG.1

# FIG.2

**FIG.3**

**FIG.4**

25

**FIG.5**

**FIG.6**

FIG.7

**FIG.8**

**Documents brevets cités dans la description**

- US 6862026 B

- US 6862026 B2

**Littérature non-brevet citée dans la description**

- **GUIBAS L J et al.** *Kinetic collision detection : algorithms and experiments,* ISBN 0-7803-6576-3
- **D. JOHNSON ; E. COHEN.** Spatialized Normal Cone Hierarchies. *In Proc. 2001 ACM Symposium on Interactive 3D Graphics, Research Triangle Park,* 19 Mars 2001, 129-134
- **J. R. MUNKRES.** Elements of Algebraic Topology, Advanced Book Program. Perseus Publishing, 1984
- **D. P. BERTSEKAS.** Convex Analysis and Optimization. Athena Scientific, 2003

- Fast Proximity Queries with Swept Sphere Volumes. **E. LARSEN ; S. GOTTSCHALK ; M. LIN ; D. MANOCHA.** Technical report TR99-018. Department of Computer Science, University of N. Carolina
- **C. ERICSON.** Real Time Collision Detection. Elsevier, MK Press, 2005
- **NINA AMENTA ; SUNGHEE CHOI ; RAVI KOLLURI.** *The Power Crust Sixth ACM Symposium on Solid Modeling and Applications,* 2001, 249-260
- **NINA AMENTA ; SUNGHEE CHOI ; RAVI KOLLURI.** *The Power Crust, unions of balls, and the medial axis transform Computation Geometry: Theory and Applications,* 2001, vol. 19 (2-3), 127-153